# EUROPÄISCHE PATENTSCHRIFT

(11) **EP 1 932 695 B1**
(45) Veröffentlichungstag und Bekanntmachung des Hinweises auf die Patenterteilung: **04.03.2009**
(21) Anmeldenummer: 06025637.7
(22) Anmeldetag: 12.12.2006
(51) Int. Cl.: B60H 1/00

(54) **Thermoelektrische Klimaanlage für Fahrzeuge**
Thermoelectric air conditioning for vehicles
Installation de climatisation thermoélectrique pour véhicules

(43) Veröffentlichungstag der Anmeldung: 18.06.2008
(73) Patentinhaber: Balogh, Dezsö, 1068 Budapest, VI.Ker (HU)
(72) Erfinder: Balogh, Dezsö, 1068 Budapest, VI.Ker (HU)

(56) Entgegenhaltungen:
- EP-A2- 1 038 701
- WO-A-97/22486
- US-A1- 2005 247 446
- US-A1- 2006 225 441

## Beschreibung

Diese Erfindung betrifft eine thermoelektrische Klimaanlage für Fahrzeuge mit Verbrennungsmotor, mit Flüssigkeitskühlung und Elektromotor. Als Anwendungsbereich der vorliegenden Erfindung werden die Fahrzeuge mit Verbrennungsmotor, Wasserkühlung und/oder Elektromotor bestimmt.

Weder die Struktur noch das Kühlmittel oder das Betriebsprinzip des vorgenannten Gerätes sind gleich wie bei den bisher bekannten und benutzten Kühlgeraten. Für die zurzeit benutzten Kühlgeräte gilt ein gleiches Grundprinzip. Das durch Kompressor verdichtete und erwärmte Gas wird über einen durch Lüfter gelüfteten Wärmetauscher hindurchgeführt und durch ein Expansionsventil in einen innenräumlichen Wärmetauscher expandiert (verdampft). Das ausgedehnte Gas und damit auch der Wärmetauscher werden abgekühlt. Die abzukühlende Luft ist über die Lamellen-Abkühlungsfläche dieses Wärmetauschers hindurchgeführt. Es gibt also in jedem Fall einen Kompressor, und Gas als Arbeits- und Kühlmittel. Die meisten Kühlgeräte verwenden Gas nur zur Kühlung. Trotzdem sind die Kühlgeräte der Fahrzeuge auch zur Heizung fähig, und diese Heizfunktion wird durch einen inneren Wärmetauscher erfüllt, der mit der Kühlflüssigkeit des Fahrzeugmotors geheizt wird. Es gibt auch weitere Klimaanlagen, die keinen mit Flüssigkeit geheizten Wärmetauscher enthalten, weil hier der Gaskreislauf mit Kompressor auch für Heizung benutzt wird. Die Struktur und das Betriebsprinzip dieser Geräte sind gleich wie die Klimaanlagen, wo Gas ausschließlich nur für Heizung benutzt wird. Der Unterschied liegt in der Variabilität der Richtung der Kompressionsexpansion, die wegen den beiden Expansionsventilen bei der Heizung umgekehrt ist.

Die oben genannten Lösungen bedürfen einer fortwährenden Wartung. Eine solche Lösung wurde zum Beispiel in den Skoda Fabia Autos eingebaut, wo eine Klimaanlage eingesetzt wird, die heute als eine der modernsten gilt. Sie wird in dem Kapitel "Heizung und Klimaanlage" (Seite 257) des Buchs "Jetzt helfe ich mir selbst" (Motorbuch Verlag) und in dem Kapitel Nr. 2.18 (Seiten 123-130) im Buch "Automobily Skoda Fabia" des tschechischen Grada Verlags dargestellt. In regelmäßigen Zeitabständen soll man die Gasmenge und die Dichtheit der Rohrleitung überprüfen. Die Gasmigration sieht man mit bloßen Augen nicht, nur unter UV-Licht, mit spezifischen Indikatorflüssigkeiten. Der

Kompressor ist am Motorblock befestigt, der durch den Keilriemen des Motors angetrieben wird. Die schwingungsdämpfenden Aufhängungen des Motors ermöglichen kleinere Bewegungen, Schwingungen, und daraus folgt, dass die flexiblen Hochdrucksrohrleitungen des Kompressors einer starken Belastung ausgesetzt sind, die eine bedeutende Fehlerursache bedeuten. Ein weiteres Problem ist, dass der Kompressor nicht mit konstanter Drehzahl sondern in einem Drehzahlbereich unter ständigem Verdichtungsdruck betrieben wird. Daraus folgt, dass wegen des strukturellen Aufbaus das Mehrfache der Kühlleistung vom Motor abgezogen wird, was zur Steigerung des Kraftstoffverbrauchs führt. Es ist sogar strukturell sehr kompliziert, die Herstellung ist deswegen aufwendig, und es bedarf Schmierung, die durch innere Ölfüllung sichergestellt wird. Die Ölfüllung und das Kühlgas sind keine umweltschonenden Stoffe. Durch die Lösung nur mit Gas für Heizung und Kühlung wird der mit dem Kühlwasser des Motors geheizte, innere Wärmetauscher ausgeklammert, und die Klimaanlage wird dadurch einfacher, aber die Motorleistung wird auch bei Heizung unnötigerweise reduziert und nicht einmal die während des Betriebs vom Motor entstandene Wärme für Heizung wird ausgenutzt. In den meisten Fällen wird natürlich ein mit dem Kühlwasser des Motors geheizter Radiator für die Heizung benutzt. Die Kühlung wird durch ein Abdampfgerät, den gasgekühlten Wärmetauscher sichergestellt. So werden zwei Wärmetauscher eingesetzt. Am nächsten verwandt mit der Strukturlösung der im Titel genannten Anlage ist die PCT-Patentanmeldung Nr. WO 97/22486. Hier wird ein Wärmetauschergerät dargestellt, das aus zwei Wärmetauschern mit spezifisch bemessenen strömungsleitenden Rillen und aus einer/mehreren thermoelektrischen Einheit(en) zwischen ihnen besteht. Wenn es in einem Fahrzeug eingesetzt wird, so werden hier zwei Umlaufkreise in Verbindung mit dem Wärmetauscher bestimmt, und es gibt in jedem Kreis einen Wärmetauscher und ein Umlaufgerät. In der genannten Patentanmeldung wird grundsätzlich ein Wärmetauscher dargestellt, und bei der Anwendung in einem Fahrzeug werden zwei Lösungen angegeben, die zwei anzulegende Flüssigkeitsumläufe enthalten, deren Strukturelemente im Großen und

Ganzen gleich mit der im Titel genannten Erfindung sind, in dieser Anmeldung wird aber keine konkrete Realisierung, keine Betriebslösung vorgeschlagen. Durch einen optimalen Betrieb der Anlage kann man sogar höheren Komfortansprüchen genugtun als bei den aktuell verwendeten Fahrzeugklimaanlagen. Bei einem optimalen Betrieb kann die Temperaturregelung nicht nur durch die wechselweise Bedienung der kalten und warmen Luftströme, bzw. der Heiz-/Kühlfunktionen gelöst werden, sondern es wird auch ein Luftstrom mit beliebiger Temperatur innerhalb des Regulierungsbereiches möglich, wodurch ein vielmehr besseres Komfortgefühl entsteht. Die genannte PCT bietet keine Lösung für diesen Fall an. Durch die dargestellte technische Lösung kann die Leistung der Klimaanlagen mit Kompressor nicht erreicht werden, bzw. man kann in dem Fahrgastraum keine um 18-20 C° niedrigere Temperatur als die Umgebungstemperatur erreichen, weil ein Stück Wärmetauscher-Gerät die Aufgabe hat, die Wärme abzufördern, die auf der sich erwärmenden Seite der Peltier-Elemente entsteht. Im Mittelpunkt der PCT-Patentanmeldung Nr. WO 97/22486 steht eigentlich ein Wärmetauscher, der eine Wärmeabfuhr mit besserem Wirkungsgrad ermöglicht, es hat sich aber nach meinen Forschungsergebnissen erwiesen, dass das Grundproblem durch die bekannt gegebene Lösung reduziert aber nicht aufgehoben wird. Aufgrund seines Aufbaus kann es zudem eine wesentliche Fehlerquelle werden. Es hat sich weiterhin auch erwiesen, wenn Peltier-Elemente mit geeigneter Kühlleistung (es kann im Fahrgastraum unter eine Temperatur um 18-20 C° kälter als die Umgebungstemperatur gekühlt werden) nebeneinander und/oder aufeinander und miteinander elektrisch gerecht verbunden eingesetzt werden, und die Elemente genügend Strom zur maximalen Kühlleistung durchfließt, so muss/müssen die warme(n) Seite(n) der Elemente zur Abführung der entstehenden wesentlichen Wärmemenge an eine große, aus einem einzigen Block gestaltete wärmeleitende Fläche mit großem Gewicht bzw. an einen Wärmetauscher gekoppelt werden. Diese Fläche oder der Wärmetauscher soll bereit sein, die Wärmemenge abzuführen, damit die Kühlleistung nicht geringer wird. So ist die Verwendung in Fahrzeugen, insbesondere in Personenkraftwagen aus praktischen Gründen des großen Ausmaßes und Gewichtes unmöglich. Das Prinzipschema der in der Patentanmeldung bekannt gegebenen Klimaanlage bietet keine Lösung für den Einsatz in Fahrzeugen mit elektrischem Antrieb an. Hier wird eine Lösung ausgesprochen nur für Fahrzeuge mit Verbrennungsmotor angeboten. In dieser bekannt gegebenen Klimaanlage werden zwei Prinzipschemas dargestellt. Nach der einen Lösung wird sowohl die Heizfunktion als auch die Kühlfunktion durch den Wärmetauscher im Innenraum des Fahrzeugs erfüllt. Die Abkopplung des Heiz-Kühl-Wärmetauschers von dem warmen Kühlwasserumlauf des Verbrennungsmotors und seine Ankopplung an den kalten Flüssigkeitsumlauf der Klimaanlage erfolgt durch vier Ventile. Zwei davon sind Wechselventile und zwei davon sind Sperrventile. Das Problem dieser Lösung liegt darin, dass die Zirkulation des aus dem Motor austretenden zur Heizung des Fahrgastraums eingesetzten warmen Flüssigkeitsumlaufs bei Kühlfunktion bzw. bei der Abkopplung des Wärmetauschers aufhört. In einigen Verbrennungsmotoren kann es eventuell zu Problemen führen, weil sich dadurch auch die weiteren Flüssigkeitsumläufe bei der Kühlung des Motors verändern können. Zudem sind die vier Ventile überflüssig. In dem zweiten Prinzipschema wird eine andere Lösung mit einem viel einfacheren Umlaufsystem dargestellt, aber hier braucht man bereits zwei Wärmetauscher in dem Innenraum des Fahrgastraums. Durch den einen wird die Heizfunktion erfüllt, und durch den anderen die Kühlfunktion. Durch diese Lösung steigt jedoch die Anzahl der einzubauenden Teile überflüssig an, sowie der Wirkungsgrad der Luftzufuhr vom Lüfterventilator wird sogar bei einer ausgeschalteten Klimaanlage reduziert, weil die beiden Wärmetauscher aufeinander montiert sind, und der Luftwiderstand wird größer, so braucht man einen Lüfterventilator mit höherer Leistung, und dadurch erhöht sich der Strom- bzw. der Kraftstoffverbrauch des Fahrzeugs unnötig.

Die Erfindung hat sich zum Ziel gesetzt, eine Klimaanlage aus einfachen, umweltfreundlichen Elementen aufzubauen, die Wartung kaum oder nur selten verlangt, zuverlässig ist und auch in der Praxis perfekt funktioniert. Ziel der Erfindung ist weiterhin der Einsatz der Klimaanlage in Fahrzeugen sowohl mit Verbrennungsmotoren als auch mit elektrischem Antrieb sowie ein Betrieb dieser Anlagen, deren Kühl- und

Heizleistung gleich wie die Leistung der Klimaanlagen mit Kompressor ist, aber ihre Energieaufwendung nur 25-30% der Klimaanlagen mit Kompressor beträgt. Also der Wirkungsgrad ist besser. Die Temperaturreglereinheit der Klimaanlage ist einstellbar, für ein höheres Komfortgefühl kann man einen Luftstrom gleicher Temperatur wie die erwünschte innenräumliche Temperatur einströmen lassen. Durch diese Lösung wird die Klimaanlage mit Kompressor und Gasmittel abgelöst und es wird eine thermoelektrische Klimaanlage eingesetzt, deren Kühlleistung sowohl in Fahrzeugen mit Verbrennungsmotor als auch mit elektrischem Antrieb durch Peltier-Elemente mit Flüssigkeitsmittel sichergestellt wird, wobei dieses Mittel bei Fahrzeugen mit Verbrennungsmotor gleich mit der Kühlflüssigkeit des Motors ist. Bei Fahrzeugen mit Verbrennungsmotor erfolgt die Heizung auf einer traditionellen Weise durch die Betriebswärme des Fahrzeugsmotors. Dafür kann der Radiator im Innenraum des Fahrzeugs von dem den Motor kühlenden warmen Flüssigkeitsumlauf der Heizung auf den kalten Kühlflüssigkeitsumlauf der Klimaanlage durch Ventile umgeschaltet werden.

Der Motor eines Fahrzeugs mit elektrischem Antrieb verfügt im allgemeinen über keine Flüssigkeitskühlung, und erzeugt keine bedeutende Wärme, so kann er zur Heizung nicht effektiv verwendet werden. Deswegen soll man ein gesondertes Flüssigkeitsumlaufsystem für die Klimaanlage ausgestalten. Bei Fahrzeugen mit elektrischem Antrieb erfüllen die Peltier-Elemente auch die Heizfunktion durch eine Umpolung, wodurch die Richtung der Wärmeströmung umgekehrt wird. Die Funktion der Betriebsheizung kann durch eine thermoelektrische Heizung natürlich nicht abgelöst werden, es wäre so kein guter Wirkungsgrad möglich. Gerade deswegen hat ein Betrieb der Klimaanlage unter der Temperatur von +5 °C keinen Sinn. Die Betriebsheizung sollte man durch eine andere elektrische Heizung lösen. Die Peltier-Elemente können in irgendwelcher vorteilhaften Aufstellung, nebeneinander, aufeinander und in irgendeiner elektrischen Schaltung eingesetzt werden, aber sie sollen zwischen zwei Wärmetauschern, in einer "Sandwich-Struktur" stehen. Sogar eine Dreischicht-Sandwichstruktur ist zulässig, wenn es benötigt wird. In diesen Fällen grenzen beide Flächen eines Wärmetauschers der kalten Seite an kalte Seiten der Peltier-Elemente und die Wärmeübertragung von deren warmen Seiten erfolgt durch zwei andere Wärmetauscher der warmen Seite. So entsteht eine Dreischicht-Struktur. Die warmen Seiten der Peltier-Elemente grenzen an einen Wärmetauscher der warmen Seite, die kalten Seiten der Elemente an einen Wärmetauscher der kalten Seite, und die Flächen sind ganz eben und werden durch eine geeignete Schließkraft festgebunden. Im Inneren von jedem Wärmetauscher wurden schlangenförmige strömungsleitende Flüssigkeitsrillen ausgestaltet. Durch den Wärmetauscher auf der warmen Seite wird die entstehende Wärme entzogen, und an ein flüssiges Mittel übertragen, das die Wärme mit Hilfe einer Umlaufpumpe zu einem außenräumlichen Kühlradiator liefert, und die Wärme wird dort durch einen Lüfterventilator an die Umgebung abgegeben. Durch den Wärmetauscher auf der kalten Seite wird die entstehende Kälte an das flüssige Mittel übertragen, das so gekältet zu einem Lamellenradiator in dem klimatisierten Raum mit Hilfe einer Umlaufpumpe geliefert wird. Das Mittel durchfließt den Radiator, so kühlt sich die in den Innenraum eingeströmte Luft ab, und so wird der Innenraum gekühlt. Die größte Schwierigkeit der Verwirklichung einer thermoelektrischen Klimaanlage war bisher die wesentliche Wärmeerzeugung der Peltier-Elemente. Gerade deswegen soll die Wärmeabfuhr optimal gelöst werden, beziehungsweise die auf der sich erwärmenden Seite der Peltier-Elemente entstehende Wärme soll abgefördert werden, damit die Temperatur der Peltier-Elemente und des Wärmetauschers der warmen Seite in der Nähe der Umgebungstemperatur bleibt, die möglichst nicht um 15 C° höher sein darf. Es wird als primär betrachtet, ob die Anlage eingebaut und angewendet werden kann, so soll man das möglichst geringste Gewicht und Ausmaß erzielen. Die einzige richtige Lösung ist, wenn das Ausmaß der Wärmetauscher, besonders die Flächengröße ungefähr gleich wie die Flächen der anstehenden Peltier-Elemente ist. Kleiner können sie auf keinen Fall sein! In thermischer Hinsicht hat diese Lösung einen Nachteil, weil die bei der Ausnutzung der maximalen Kühlleistung der Peltier-Elemente entstehende Wärmemenge auf der warmen Seite nicht in dem Maße abgefördert werden kann, so dass die oben genannte, während meinen Forschungen entdeckte Temperaturbedingung erfüllt wird. Nämlich die Bedingung, dass die Temperatur des Wärmetauschers der warmen Seite die Umgebungstemperatur um mehr als 15 C° nicht überschreiten darf. Die Wärmeabfuhr ist begrenzt, diese Grenze kann nicht einmal durch einen wärmeabgebenden Radiator der warmen Seite, der größer als nötig ist, oder durch die Effizienzerhöhung der Zirkulation überstiegen werden. Also die Peltier-Elemente können auf keinen Fall mit Maximalleistung betrieben werden, und es ergibt sich dadurch nur eine kleinere Kühlleistung als die einfache Summe der Parameter der einzelnen Peltier-Elemente. So wird aber auch die entstehende Wärmemenge der warmen Seite immer kleiner. Deswegen soll die Verwendung der Peltier-Elemente mit der möglichst größten Leistung angestrebt werden. Das sind konkret die Peltier-Elemente mit einer potenzialen Kühlleistung über 200 W. Es hat sich während meiner Forschungsarbeit erwiesen, und es ist auch aus den von Peltier-Elementen-Herstellern veröffentlichten Diagrammen abzulesen, dass es für jedes Peltier-Element charakteristisch ist, dass die entstehende Kühlleistung und die Wärmemenge circa bei der Hälfte der maximalen Stromstärke - Stärke des Stroms, der maximal das Element durchfließen darf - beinahe gleich sind. Wird diese Stromstärke allmählich reduziert, so nehmen auch die Kühlleistung und die entstehende Wärmemenge stetig ab. Die beiden Werte gehen aber stufenweise voneinander, und zwar zum Vorteil der Kühlung. Also die Abnahme der Wärmemenge wird immer größer als die Abnahme der Kühlleistung. Wird die Stromstärke allmählich erhöht, so nehmen auch die Kühlleistung und die entstehende Wärmemenge zu. Die beiden Werte gehen aber auch in diesem Fall stufenweise voneinander, und zwar zum Vorteil der entstehenden Wärmemenge. Die Erhöhung der entstehenden Wärmemenge wird also immer größer als die Erhöhung der Kühlleistung. Es steht auch fest, dass je mehr die das Peltier-Element durchfließende Stromstärke abnimmt, desto mehr wird die Größe der Wärmedifferenz der kalten und warmen Seite reduziert. Aufgrund dieser Erwägungen soll man Arbeitspunkte mit der Stromstärke unter der Hälfte der durchfließbaren maximalen Stromstärke wählen. Also die durch den Betrieb der Peltier-Elemente entstehende Wärmemenge soll kleiner als die Kühlleistung sein. Sollte also irgendwelche Aufstellung der Peltier-Elemente benötigt werden, egal ob nebeneinander und/oder aufeinander montiert, man soll die thermische und elektrische Schaltung durchführen, wo sich durch den Widerstand der Elemente solche Stromverhältnisse ergeben, dass die Stärke des die Peltier-Elemente durchfließenden Stroms unter der Hälfte der maximalen Stromstärke liegt. Der Arbeitspunkt soll so gewählt werden, dass eine solche Menge der Betriebswärme der warmen Seite abgefördert und an die Umgebung durch den mit Ventilator gelüfteten Kühlradiator abgegeben werden kann, dass die unumgängliche Abfallwärme die Temperatur des Wärmetauschers der warmen Seite höchstens um 15 C° höher als die Umgebungstemperatur erhöht. Die so ausgestaltete Kühleinheit, die aus den Wärmetauschern der kalten und warmen Seite und den von ihnen in die Mitte genommenen Peltier-Elementen besteht, kann für ideal gehalten werden, aber ihre Leistung reicht für die Kühlung des Fahrgastraums oder des Innenraums nicht wie die Klimaanlagen mit Kompressor aus. Die Lösung liegt in der Anwendung von zwei oder mehr Kühleinheiten in geeigneter thermischer und hydraulischer Schaltung. Die Wärmetauscher der kalten Seite von den Kühleinheiten der Klimaanlage sind miteinander hydraulisch in Reihenschaltung, also thermisch in Parallelschaltung verbunden. Die Schaltung der Wärmetauscher der warmen Seite kann auf drei Weisen durchgeführt werden. Die eine und zugleich effektivste Methode wird bei der Anwendung von mehr als drei Kühleinheiten wirklich erwünscht, es ist idealerweise die unabhängige Schaltung. In diesem Fall werden die Flüssigkeitsumläufe der warmen Seite jeder Kühleinheit von je einer einzelnen Umlaufpumpe zirkuliert, und zwar durch Kühlradiatoren, die mit unabhängigem Ventilator gelüftet werden, oder durch einen mit Ventilator gelüfteten Radiator, der unabhängige Flüssigkeitsrillen hat. Die andere Methode ist die Reihenschaltung, die zwar nicht so effektiv, aber material- und kostensparend ist, die idealerweise bei zwei oder drei Kühleinheiten noch perfekt funktioniert. In diesem Fall sind die warmseitigen Wärmetauscher jeder Kühleinheit durch unabhängige, mit Ventilator gelüftete Radiatoren oder durch einen mit Ventilator gelüfteten Kühlradiator, der über unabhängige Flüssigkeitsrillen verfügt, miteinander in Reihenschaltung verbunden. Hier sorgt nur eine einzige Umlaufpumpe für die Zirkulation des Flüssigkeitsumlaufs der warmen Seite. Die dritte Methode ist die Parallelschaltung. Bei einer Parallelschaltung werden die warmseitigen Flüssigkeitsumläufe der Kühleinheiten durch eine Umlaufpumpe zirkuliert. Die Flüssigkeitsumläufe sind in Parallelschaltung mit einem Kühlradiator mit genügender Leistung oder mit mehreren, miteinander in Reihenschaltung verbundenen Kühlradiatoren verbunden, die über kleinere Leistung verfügen und durch einen oder mehr Ventilatoren gelüftet sind. Bei Beachtung der früher schon mehrmals erwähnten Temperaturbedingung können - wenn möglich und nötig - die unabhängigen Kühlradiatoren in irgendwelcher warmseitigen Schaltung der Wärmetauscher nicht nur voneinander unabhängig sondern auch aufeinander montiert werden und sie können durch einen Ventilator oder gemeinsam durch mehr Ventilatoren gelüftet werden.

Die Konstanthaltung der von dem Benutzer eingestellten Temperatur in dem klimatisierten Raum wird in den Klimaanlagen mit Kompressor durch die ständige Wechselschaltung der Heiz- und Kühlfunktionen bei Maximalleistungsbetrieb erreicht. Diese Methode kann eine mögliche Lösung für die Temperaturregelung sein, aber der Kfz-Fahrer und der Fahrgast im Vordersitz kriegen je einen kalten/warmen Wärmeschock durch die ständige Umschaltung der Thermostatautomatik, wenn sie die Luftzuführung durch Lamellen der Lufthutze auf sich selbst einstellen. Für Viele bedeutet der Betrieb der Klimaanlage ein unangenehmes Gefühl. Wenn eine Luftzufuhr mit der eingestellten erwünschten Temperatur möglich wäre, so würde es das Komfortgefühl beim Betrieb der Klimaanlage wesentlich erhöhen. Dafür soll die ständige Kontrolle und Regelung der Temperatur der eingeströmten Luft sowohl bei Heiz- als auch bei Kühlfunktionen durch das elektronische Steuerungssystem ermöglicht werden. Bei Kühlfunktion in den Fahrzeugen mit flüssigkeitsgekülhtem Verbrennungsmotor kann der Flüssigkeitsumlauf der Kühlung und somit die Temperatur der eingeströmten Luft durch die Ein-/Ausschaltungen der Peltier-Elemente perfekt reguliert werden. Bei einer Heizfunktion kann die Temperatur der eingeströmten Heizungsluft durch die Abkopplung des Radiators im Fahrgastraum vom Heizumlauf durch Wechselventile beziehungsweise durch die erneute Ankopplung des Radiators reguliert werden. In Fahrzeugen mit elektrischem Antrieb kann die Temperaturregelung sowohl bei Heiz- als auch bei Kühlfunktion durch die Ein-/Ausschaltungen der Peltier-Elemente gelöst werden.

In den Folgenden wird der volle Aufbau und Betrieb der Anlage dieser Erfindung dargestellt, getrennt erörtert für Fahrzeuge mit Verbrennungsmotor und mit elektrischem Antrieb beziehungsweise für Fahrzeuge, die über keinen Verbrennungsantrieb verfügen.

In den beiden Varianten wird der Transparenz und Verständlichkeit halber zunächst die Variante mit einem Stück Kälteeinheit dargestellt. Das heißt, es gibt nur eine Kälteeinheit, und sie besteht aus Peltier-Elementen zwischen primären Wärmetauschern und aus Wärmesensoren. Dementsprechend gibt es auch nur einen außenräumlichen sekundären Wärmetauscher, der für die Kühlung der warmen Seite der Kühleinheit sorgt und mit Ventilator gelüftet wird. In anderer Hinsicht ist es völlig gleich mit der auch in der Praxis anwendbaren Anlage mit zwei oder mehr Kühleinheiten. Die aus zwei oder mehr Kühleinheiten bestehende Anlage, die auch in der Praxis eine optimale Kühlleistung gewährt, wird zuletzt beschrieben. Die Lösung ist bei Fahrzeugen mit flüssigkeitsgekühltem Verbrennungsmotor der Einsatz von einem oder mehr Peltier-Elementen mit optimaler Leistung zwischen zwei außenräumlichen, an Thermostat gekoppelten primären Wärmetauschern mit elektronischem Wärmesensor, wobei die Wärmetauscher die volle ebene Fläche des Peltier-Elementes berühren. Im Inneren von jedem außenräumlichen primären Wärmetauscher wurden schlangenförmige strömungsleitende Flüssigkeitsrillen ausgestaltet, und die eine von ihnen wird an einen mit Ventilator gelüfteten außenräumlichen sekundären Wärmetauscher durch eine wärmeisolierte Rohrleitung über eine Umlaufpumpe angeschlossen, die mit dem Ausgangszweig in Reihenschaltung verbunden ist. Der andere außenräumliche primäre Wärmetauscher wird an einen mit Ventilator gelüfteten sekundären innenräumlichen Wärmetauscher angeschlossen, dessen Ausgangs- und Eingangszweige in Reihenschaltung verbunden sind und der über ein elektrisches Wechselventil verfügt, dessen Inputstellen mit elektrischem Öffnungsventil verbunden sind. Der primäre Wärmetauscher wird an den sekundären Wärmetauscher, der gleich mit dem Wärmetauscher der Heizanlage der Pkws ist, wieder durch eine wärmeisolierte Rohrleitung über eine Umlaufpumpe angeschlossen, die mit dem Ausgangszweig in Reihenschaltung verbunden ist. Das flüssige Mittel in den zwei Systemen ist gleich wie das Kühlmittel des Pkw-Motors, sie stehen in hydraulischer Verbindung, weil es auch an den Ausgleichsbehälter der Kühlflüssigkeit des Fahrzeugs angeschlossen wird. Die zwei Flüssigkeitsumläufe der Anlage verfügen über je ein Entlüftungsventil. Die Elektroeinheiten sind elektrisch indirekt an den zusätzlichen von dem Verbrennungsmotor des Fahrzeugs angetriebenen Stromgenerator durch eine elektronische Steuerungseinheit angeschlossen. Der Wechsel von Heizfunktion auf Kühlfunktion erfolgt durch die Stromspeisung der elektrischen Wechselventile und Öffnungsventile, wobei die Ventile den Wärmetauscher für Innenraum von dem Kühlflüssigkeitsumlauf des Motors an den thermoelektrischen Kühlflüssigkeitsumlauf umleiten.

Die Lösung bei Fahrzeugen mit elektrischem Antrieb ist ähnlich wie bei Fahrzeugen mit flüssigkeitsgekühltem Verbrennungsmotor nur mit einem Unterschied, dass hier auch die Heizfunktion von einem Peltier-Element, durch Umpolung erfüllt wird, weil der Antriebsmotor über keinen Kühlflüssigkeitsumlauf verfügt. Daraus folgt, dass hier keine Umleitung der Kühlflüssigkeitsumläufe der innenräumlichen sekundären Wärmetauscher und keine elektrischen Wechsel- und Öffnungsventile erforderlich werden. Die beiden mit Entlüftungsventil versehenen Flüssigkeitsumläufe der Klimaanlage stehen miteinander in hydraulischer Verbindung, weil sie an einen gleichen Ausgleichsbehälter angeschlossen werden. Die Elektroeinheiten sind elektrisch indirekt an die den Elektromotor des Fahrzeugs speisende Stromquelle durch eine elektronische Steuerungseinheit angeschlossen. Die Anlage nach dieser Erfindung kann in der Praxis nur bei der Anwendung von zwei oder mehr Kühleinheiten eine gleiche Leistung wie die Klimaanlagen mit Kompressor gewähren. Die Anzahl der angewendeten Kühleinheiten hängt von der Größe des abzukühlenden Raums ab. Die primären Wärmetauscher der kalten Seite von den Kühleinheiten sind miteinander hydraulisch in Reihenschaltung, also thermisch in Parallelschaltung verbunden. Vom Anlagenaufbau her gesehen: die erste Kühleinheit mit dem Eingangszweig des außenräumlichen primären Wärmetauschers der kalten Seite und die letzte Kühleinheit mit dem Ausgangszweig des außenräumlichen primären Wärmetauschers der kalten Seite sind an einen in Reihenschaltung verbundenen, mit innenräumlichem Ventilator gelüfteten sekundären Wärmetauscher angeschlossen, der über elektrische Wechselventile verfügt, deren Inputstellen mit elektrischem Öffnungsventil verbunden sind. Der sekundäre Wärmetauscher ist gleich wie ein Wärmetauscher der Heizanlage der Pkws, und es wird wieder durch eine wärmeisolierte Rohrleitung über eine Umlaufpumpe angeschlossen, die mit dem Ausgangszweig der letzten Kühleinheit in Reihenschaltung verbunden ist. Der Ausgangszweig des primären außenräumlichen Wärmetauschers der kalten Seite in der ersten Kühleinheit wird an den Eingangszweig des primären außenräumlichen Wärmetauschers der kalten Seite in der zweiten Kühleinheit angeschlossen, deren Ausgangszweig wiederum an den Eingangszweig des primären außenräumlichen Wärmetauschers der kalten Seite in der nächsten Kühleinheit angeschlossen wird. Es geht so in der Reihe nach, ganz bis zum letzten Wärmetauscher, der auf der "n." Stelle in der Reihe steht. In Fahrzeugen mit elektrischem Antrieb wird die Heizfunktion auch bei der Anwendung von mehreren Kühleinheiten durch Peltier-Elemente durch Umpolung erfüllt. In diesem Fall sind natürlich keine elektrischen Wechselventile und kein elektrisches Öffnungsventil nötig. Die sekundären Wärmetauscher der warmen Seite der Kühleinheiten können auf drei verschiedenen Weisen angeschlossen werden: voneinander unabhängig, miteinander in Reihenschaltung oder in Parallelschaltung verbunden. Ihre Kühlung bzw. die Wärmeabfuhr und Wärmeabgabe an die Umgebung erfordern dementsprechend verschiedene Arten von Kopplungen der außenräumlichen sekundären Wärmetauscher und eventuell Umlaufpumpen, deren Anzahl gleich mit der Anzahl der Kühleinheiten ist. In einer vorteilhaften Fertigungsvariante der Anlage der Erfindung sind die primären Wärmetauscher der warmen Seite der Kühleinheiten in einer unabhängigen Schaltung, wo jeder an je einen mit einem unabhängigen Ventilator gelüfteten außenräumlichen Wärmetauscher oder an einen mit einem Ventilator gelüfteten, mit unabhängigen Flüssigkeitsrillen versehenen sekundären Wärmetauscher angeschlossen ist, und der Anschluss erfolgt durch eine wärmeisolierte Rohrleitung über eine Umlaufpumpe, die mit den Ausgangszweigen in Reihenschaltung verbunden ist. In einer weiteren vorteilhaften Fertigungsvariante sind die primären Wärmetauscher der warmen Seite der Kühleinheiten in Reihenschaltung miteinander verbunden, wo jeder an je einen mit Ventilator gelüfteten außenräumlichen sekundären Wärmetauscher angeschlossen wird, mit denen sie in Reihenschaltung verbunden sind. Die so entstandenen, in Reihenschaltung verbundenen Wärmetauscherpaare mit Kühleinheit-Ventilatoren sind auch selbst miteinander in Reihenschaltung verbunden. Für den Flüssigkeitsumlauf des Reihenschaltungskreises sorgt eine Umlaufpumpe. Besser gesagt, der Ausgang des ersten außenräumlichen primären Wärmetauschers der warmen Seite wird an den Eingang eines mit Ventilator gelüfteten, außenräumlichen, sekundären Wärmetauschers angeschlossen, dessen Ausgang an den Eingang des außenräumlichen primären Wärmetauschers der warmen Seite der zweiten Kühleinheit, dessen Ausgang an den Eingang des zweiten, mit Ventilator gelüfteten, außenräumlichen, sekundären Wärmetauschers angeschlossen wird. Es geht so weiter bis zur letzten Kühleinheit, die auf der "n." Stelle in der Reihe steht, deren außenräumlicher primärer Wärmetauscher auf der warmen Seite an den Eingang des außenräumlichen primären Wärmetauschers der warmen Seite der ersten Kühleinheit durch eine mit dem Ausgangsweig in Reihenschaltung verbundene Umlaufpumpe über eine wärmeisolierte Rohrleitung angeschlossen wird. In einer weiteren vorteilhaften Fertigungsvariante sind die außenräumlichen primären Wärmetauscher der warmen Seite der Kühleinheiten miteinander in Parallelschaltung verbunden, wo jeder an je einen mit einem Ventilator gelüfteten außenräumlichen sekundären Wärmetauscher angeschlossen ist, und der Anschluss erfolgt durch eine wärmeisolierte Rohrleitung über eine Umlaufpumpe, die mit den Ausgangszweigen in Reihenschaltung verbunden ist. In einer weiteren vorteilhaften Fertigungsvariante können die mit Ventilator gelüfteten außenräumlichen sekundären Wärmetauscher, die die Kühlung der primären Wärmetauscher der warmen Seite der Kühleinheiten dienen, wenn mehrere Wärmetauscher in der Schaltung verwendet werden oder unter anderen wärmetechnischen Verhältnissen, nicht nur unabhängig voneinander, sondern auch ihre Kühlfläche aneinandergelegt, mit einem oder mehr Ventilatoren auch gemeinsam gelüftet werden.

Detaillierter wird die Klimaanlage der Erfindung in Zeichnungen beschrieben, wo die Gesamtheit der Bestandteile Nr. 1, 2, 3 die auch oben erwähnte Kühleinheit bilden.

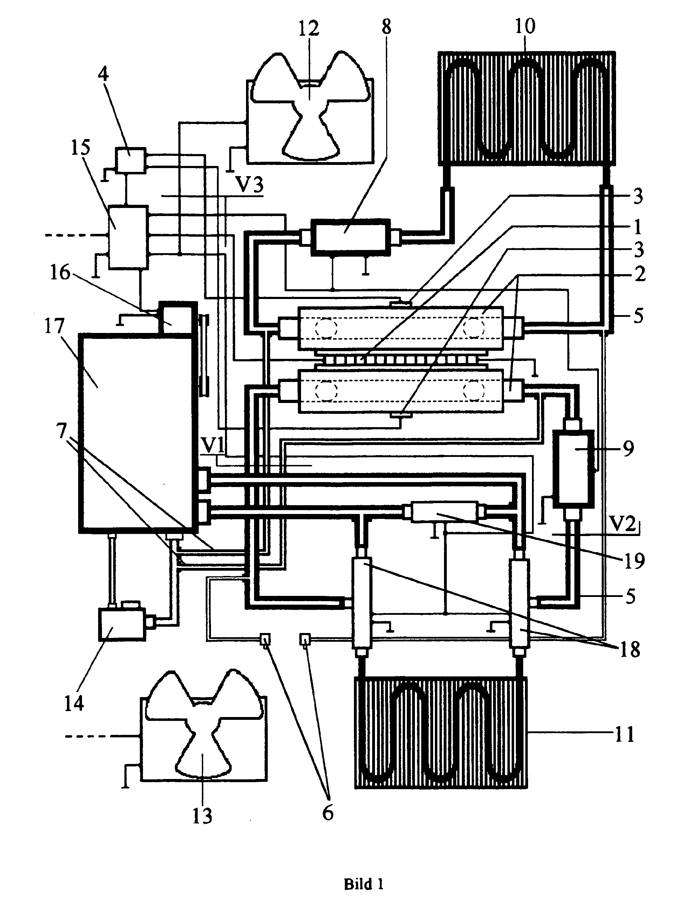

Auf dem Bild 1 steht die schematische Zeichnung über die Anwendung der Klimaanlage der Erfindung in Fahrzeugen mit flüssigkeitsgekühltem Verbrennungsmotor, es ist auch eine Kühleinheit zu sehen, in einem absolut statischen Zustand (der Fahrzeugmotor und die Klimaanlage sind außer Betrieb), auf dem

Bild 2 steht die schematische Zeichnung über die Anwendung der Klimaanlage der Erfindung in Fahrzeugen mit flüssigkeitsgekühltem Verbrennungsmotor, es ist auch eine Kühleinheit zu sehen, in einem statischen Zustand (der Fahrzeugmotor ist im Betrieb und die Klimaanlage ist außer Betrieb), auf dem

Bild 3 steht die schematische Zeichnung über die Anwendung der Klimaanlage der Erfindung in Fahrzeugen mit flüssigkeitsgekühltem Verbrennungsmotor im Kühlbetrieb, es ist auch eine Kühleinheit zu sehen, auf dem

Bild 4 steht die schematische Zeichnung über die Anwendung der Klimaanlage der Erfindung in Fahrzeugen mit flüssigkeitsgekühltem Verbrennungsmotor im Heizbetrieb, es ist auch eine Kühleinheit zu sehen, auf dem

Bild 5 steht die schematische Zeichnung über die Anwendung der Klimaanlage der Erfindung in Fahrzeugen mit flüssigkeitsgekühltem Verbrennungsmotor im Entlüftungsbetrieb, es ist auch eine Kühleinheit zu sehen, auf dem

Bild 6 steht die schematische Zeichnung über die Anwendung der Klimaanlage der Erfindung in Fahrzeugen mit elektrischem Antrieb in statischem Zustand, es ist auch eine Kühleinheit zu sehen, auf dem

Bild 7 steht die schematische Zeichnung über die Anwendung der Klimaanlage der Erfindung in Fahrzeugen mit elektrischem Antrieb im Heiz- und Kühlbetrieb, es ist auch eine Kühleinheit zu sehen, auf dem

Bild 8 steht die schematische Zeichnung über die Anwendung der Klimaanlage der Erfindung in Fahrzeugen mit elektrischem Antrieb im Entlüftungsbetrieb, es ist auch eine Kühleinheit zu sehen, auf dem

Bild 9 wird ein Teil einer Variante der Klimaanlage der Erfindung dargestellt, die in der Praxis zwei oder mehr Kühleinheiten enthält, wo die unabhängige Schaltung der außenräumlichen primären Wärmetauscher der warmen Seite sowie die als ihre Wärmeabfuhr dienenden, mit Ventilator gelüfteten außenräumlichen sekundären Wärmetauscher und die Umlaufpumpen zu sehen sind, die für die Zirkulation der Flüssigkeitsumläufe sorgen, auf dem

Bild 10 wird ein Teil einer Variante der Klimaanlage der Erfindung dargestellt, die in der Praxis zwei oder mehr Kühleinheiten enthält, wo die Reihenschaltung der außenräumlichen primären Wärmetauscher der warmen Seite sowie die als ihre Wärmeabfuhr dienenden, mit Ventilator gelüfteten außenräumlichen sekundären Wärmetauscher und die Umlaufpumpen zu sehen sind, die für die Zirkulation der Flüssigkeitsumläufe sorgen, auf dem

Bild 11 wird ein Teil einer Variante der Klimaanlage der Erfindung dargestellt, die in der Praxis zwei oder mehr Kühleinheiten enthält, wo die Parallelschaltung der außenräumlichen primären Wärmetauscher der warmen Seite sowie der als ihre Wärmeabfuhr dienende, mit Ventilator gelüftete außenräumliche sekundäre Wärmetauscher und die Umlaufpumpen zu sehen sind, die für die Zirkulation der Flüssigkeitsumläufe sorgen.

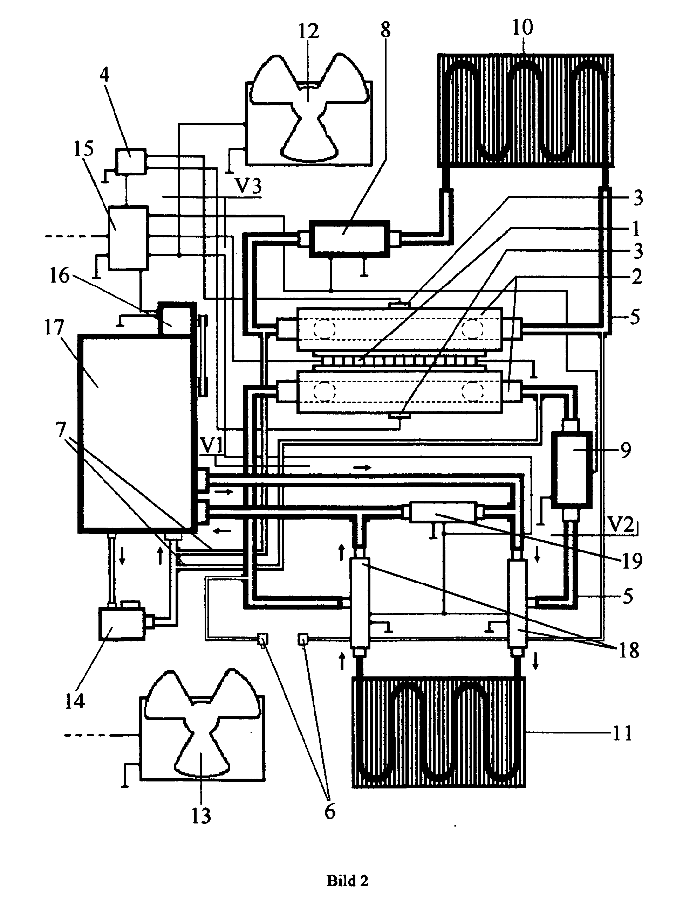

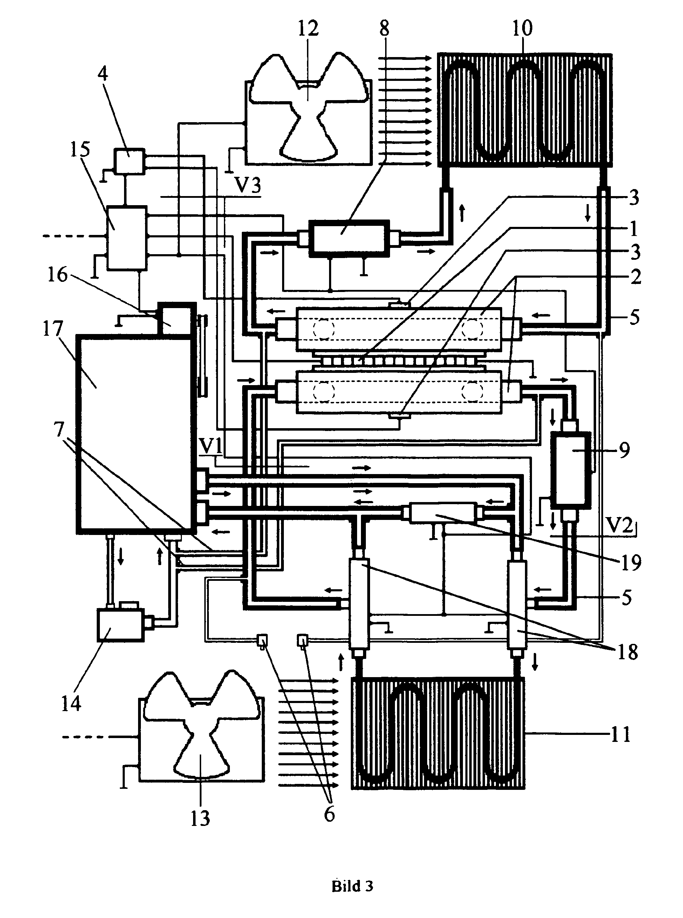

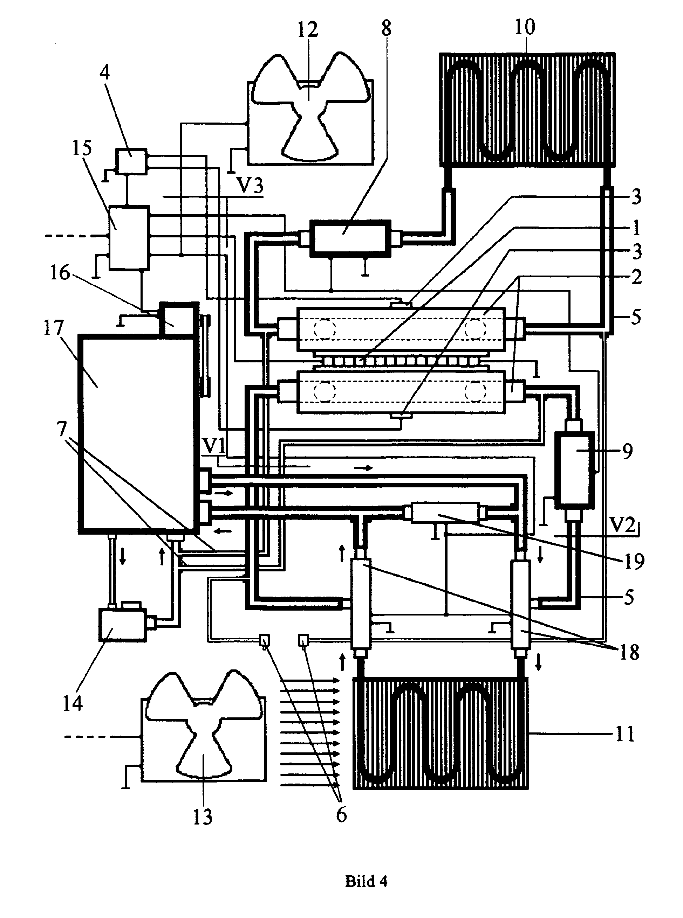

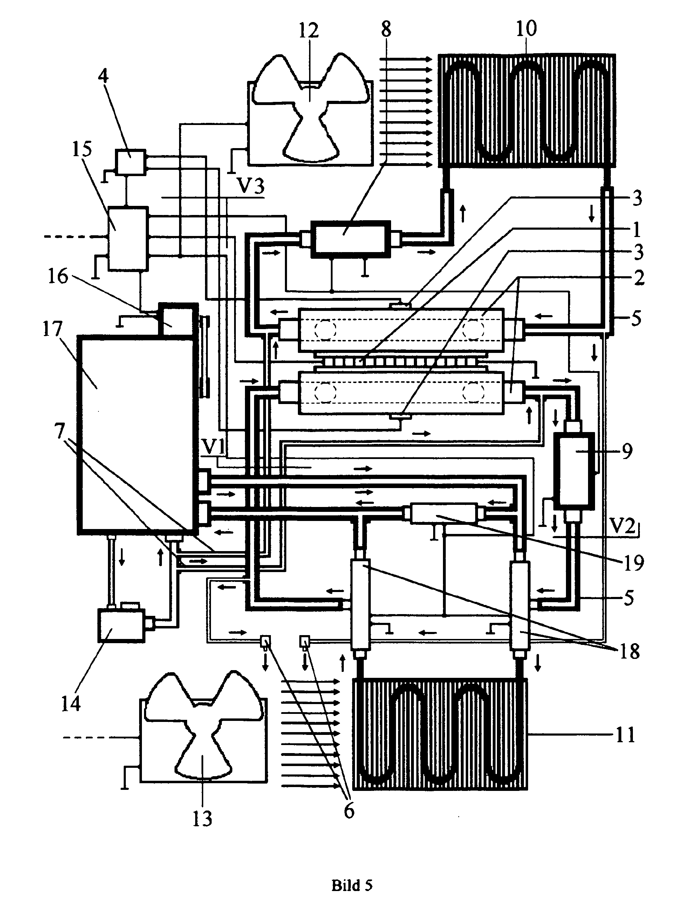

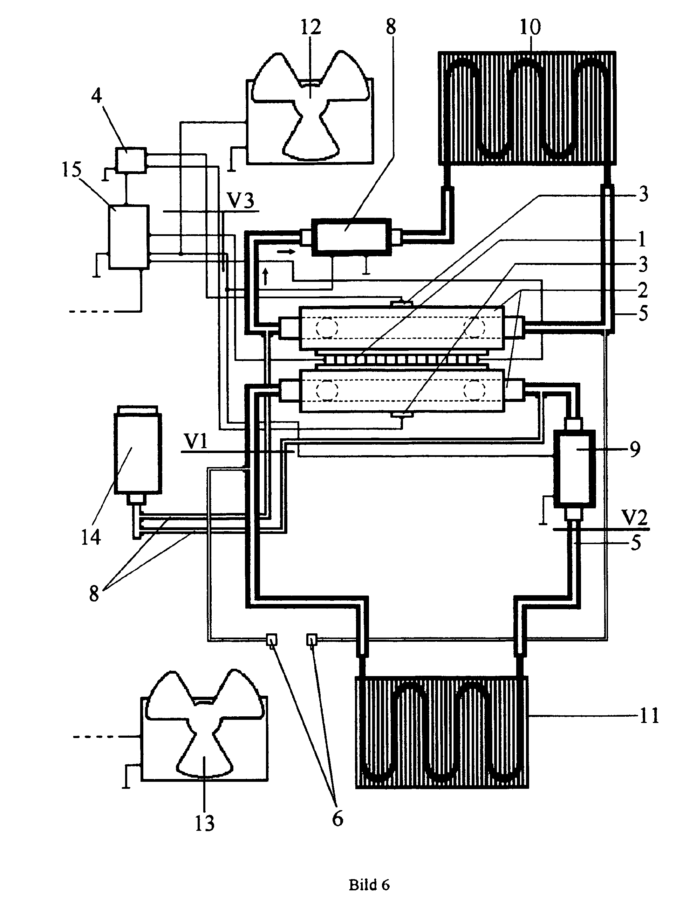

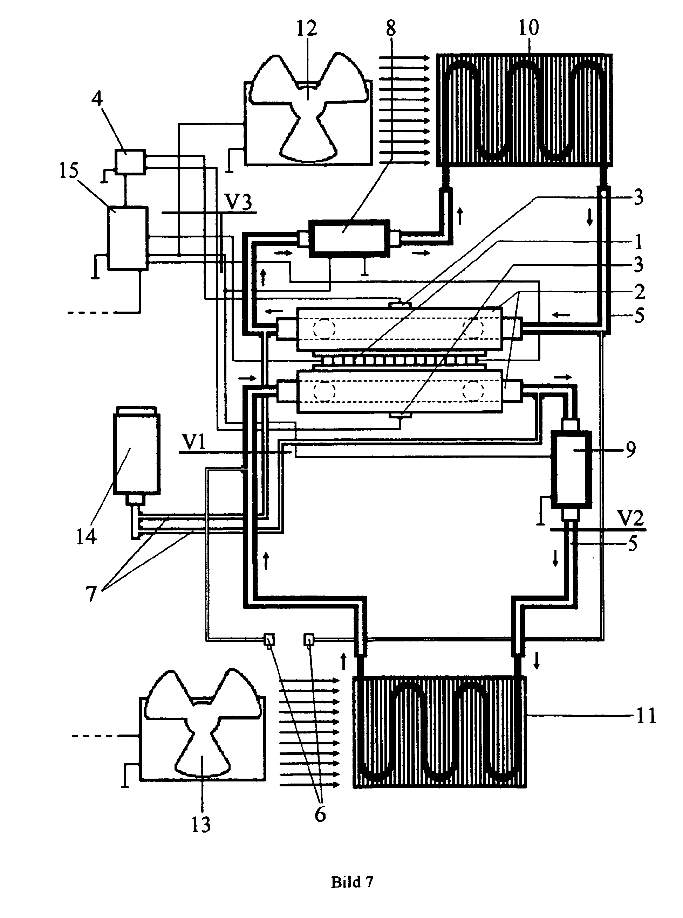

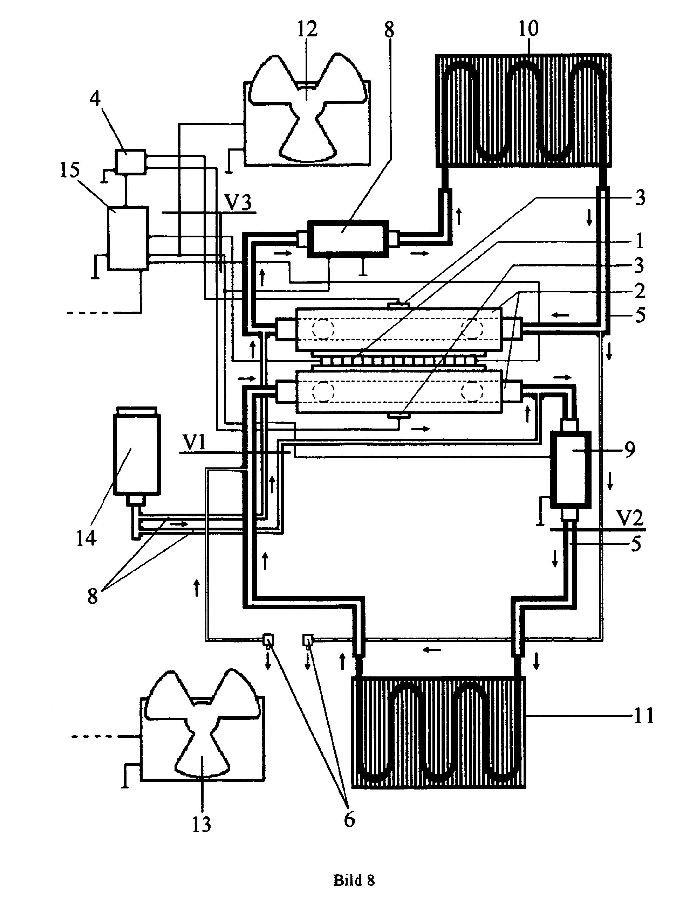

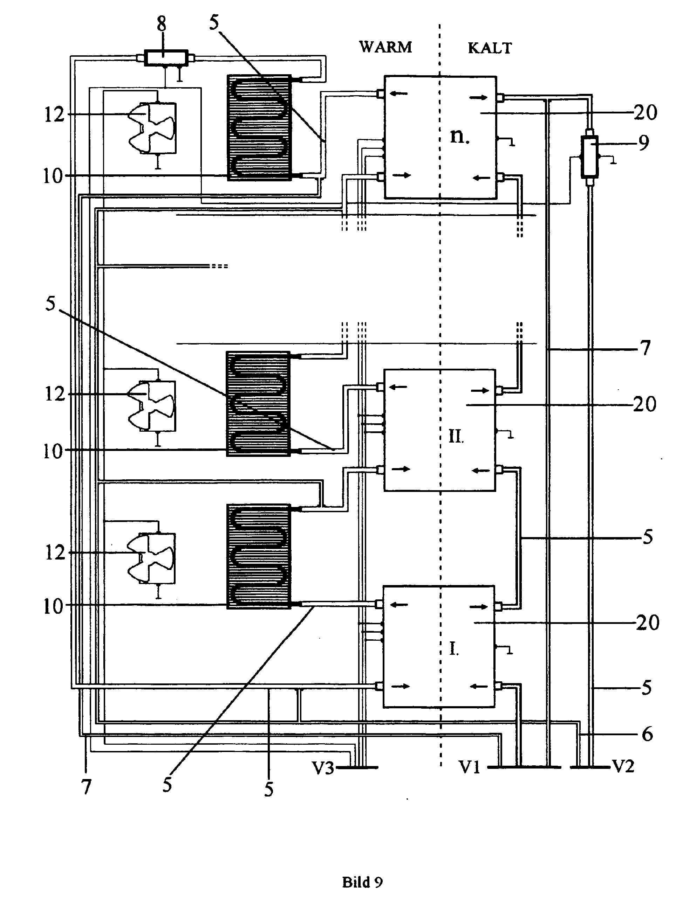

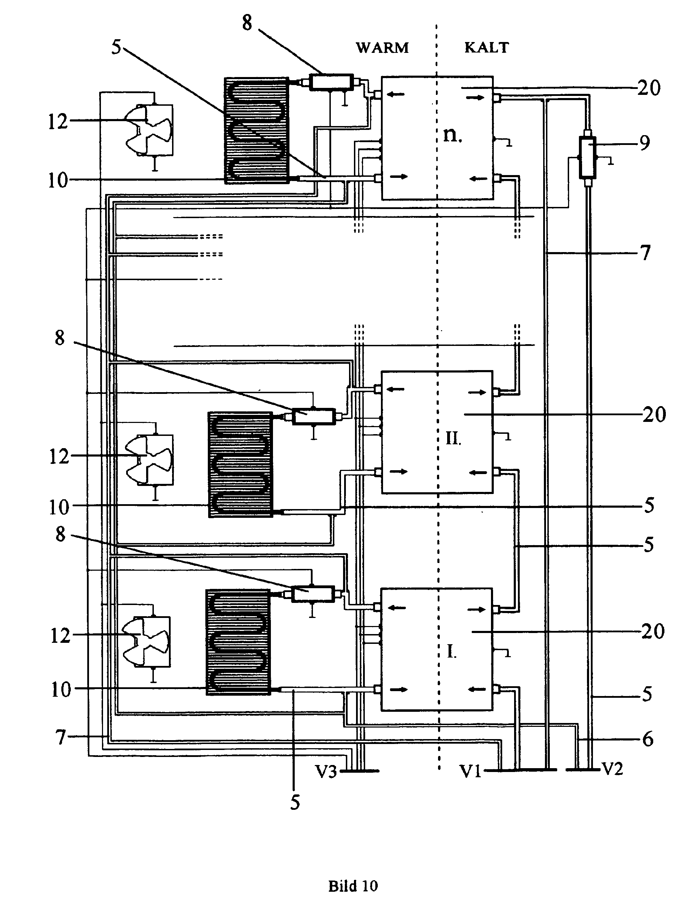

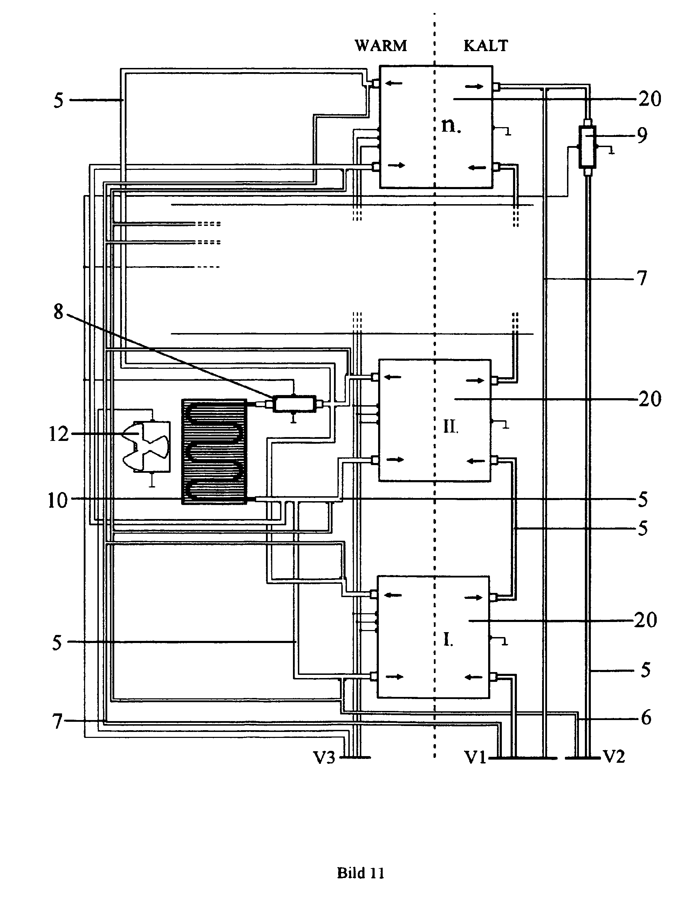

Auf dem Bild Nr. 1 ist das (1) Peltier-Element mit (3) elektronischem Wärmesensor zwischen zwei (2) außenräumlichen primären Wärmetauschern zu sehen. Die drei Einheiten sind in Profilansicht auf der schematischen Zeichnung dargestellt. Die inneren schlangenförmigen strömungsleitenden Flüssigkeitsrillen der (2) außenräumlichen primären Wärmetauscher sind mit Strichlinien markiert. Die (3) elektronischen Wärmesensoren liefern ein mit der Temperatur der (2) außenräumlichen primären Wärmetauscher verhältnisgleiches elektrisches Signal dem (4) elektronischen Thermostat, an den sie elektrisch angeschlossen sind. Der (4) elektronische Thermostat wird an die (15) elektronische Steuerungseinheit elektrisch angeschlossen. Das (1) Peltier-Element, dessen Energieversorgung auch von der (15) elektronischen Steuerungseinheit durch dicke Hochstromleitungen stammt, hat eine Kühlfunktion. Die Wärmeübertragung zwischen der kalten und warmen Seite des (1) Peltier-Elementes wird durch die beiden (2) außenräumlichen primären Wärmetauscher durchgeführt. Die warme Seite besteht aus einem (2) außenräumlichen primären Wärmetauscher, der an den (10) außenräumlichen sekundären Wärmetauscher über eine mit der Ausgangsstelle des sekundären Wärmetauschers in Reihenschaltung verbundene (8) Umlaufpumpe, durch eine (5) wärmeisolierte Rohrleitung angeschlossen wird. Die kalte Seite besteht aus einem (2) außenräumlichen primären Wärmetauscher, der an den (11) innenräumlichen sekundären Wärmetauscher durch eine (5) wärmeisolierte Rohrleitung angeschlossen wird, und der sekundäre Wärmetauscher ist mit seinen Ausgangs- und Eingangszweigen, über die Schaltpunkte der (18) elektrischen Wechselventile, in Reihenschaltung mit der (9) Umlaufpumpe verbunden. Die (18) elektrischen Wechselventile haben die Aufgabe, den (11) innenräumlichen sekundären Wärmetauscher von dem die Kühlung des (17) Verbrennungsmotors vom Fahrzeug sichernden und auch den Fahrgastraum abkühlenden Heizungskreis auf den Kühlungskreis der Klimaanlage umzuschalten. Auf der schematischen Zeichnung des (17) Verbrennungsmotors vom Fahrzeug sind die Eintritts- und Austrittspunkte des Heizungskreises sowie die Entlüftungsrohrleitungen von dem (14) Expansionsbehälter und zurück zum Behälter mit Pfeilen markiert. Normalerweise, bei ausgeschalteter Klimaanlage wird der (11) innenräumliche sekundäre Wärmetauscher an den Heizungskreis des (17) Verbrennungsmotors vom Fahrzeug angeschlossen. Das (19) elektrische Öffnungsventil wird an die Eintrittspunkte der (18) elektrischen Wechselventile in Parallelschaltung angeschlossen. Es hat die Aufgabe, den Flüssigkeitsumlauf des Heizungskreises bei eingeschalteten (18) elektrischen Wechselventilen zu sichern. Die Rohrleitungen zwischen den Bestandteilen der Klimaanlage sind alle (5) wärmeisolierte Rohrleitungen, mit Ausnahme der an den (14) Expansionsbehälter angeschlossenen (7) Zufuhrröhre und der dünnen Rohrleitungsstrecken, die den Austritt der das System entlüftenden (6) Entlüftungsventile ermöglichen sowie die Rohrleitungen des Heizungskreises im (17) Verbrennungsmotor des Fahrzeugs. Die beiden Flüssigkeitsumläufe der Klimaanlage und die Kühlflüssigkeit des (17) Verbrennungsmotors sind gleich. Die (18) elektrischen Wechselventile und das (19) elektrische Öffnungsventil sind miteinander elektrisch, in Parallelschaltung verbunden, und sie sind an die (15) elektronische Steuerungseinheit elektrisch angeschlossen. Die (8), (9) Umlaufpumpen und der (12) außenräumliche Ventilator, der den (10) außenräumlichen sekundären Wärmetauscher lüftet, sind in elektrischer Hinsicht miteinander in Parallelschaltung verbunden, sie können deswegen gleichzeitig, und zwar durch die (15) elektronische Steuerungseinheit betrieben werden. Der (13) innenräumliche Ventilator, der den (11) innenräumlichen sekundären Wärmetauscher lüftet, ist elektrisch an die innere Elektronik des Fahrzeugs angeschlossen. Die (15) elektronische Steuerungseinheit wird elektrisch unmittelbar an den durch den (17) Verbrennungsmotor des Fahrzeugs mit Keilriemen angetriebenen (16) zusätzlichen Stromgenerator angeschlossen. Die (15) elektronische Steuerungseinheit hat die Aufgabe, die Elektroeinheiten der Klimaanlage optimal zu betreiben. Darüber hinaus steht sie mit der elektronischen Steuerungseinheit der Klimaanlage in dem Fahrgastraum. Auf dem Bild Nr. 1 sieht man einen absolut statischen Zustand, wo weder die Klimaanlage noch der (17) Verbrennungsmotor des Fahrzeugs im Betrieb sind. Die Klimaanlage kann ausschließlich nur bei laufendem Motor betrieben werden. In einem absolut statischen Zustand können kein elektrisches, elektromechanisches und hydraulisches System betrieben werden. In einem statischen Zustand, wie auf dem Bild Nr. 2, bei dem Betrieb des (17) Verbrennungsmotors vom Fahrzeug und bei einer ausgeschalteten Klimaanlage kommt es schon zur Zirkulation der Flüssigkeit im Heizungskreis. Der (16) elektrische zusätzliche Stromgenerator ist in einem angetriebenen Zustand, aber all die Elektroeinheiten der Klimaanlage mit Ausnahme der (15) elektronischen Steuerungseinheit sind außer Betrieb, wobei die elektronische Steuerungseinheit in einem Bereitschaftsbetrieb ist. Auf diesem Bild, auf der schematischen Zeichnung des (17) Verbrennungsmotors vom Fahrzeug werden die Ein- und Austrittspunkte des Heizungskreises sowie die Zufuhrleitungen von dem (14) Expansionsbehälter und die Entlüftungsrohrleitungen zum Expansionsbehälter mit Pfeilen markiert. Die Flüssigkeit des Heizungskreises zirkuliert unbehindert durch die (18) elektrischen Wechselventile und sie heizt dabei den (11) innenräumlichen sekundären Wärmetauscher, die Richtung des Umlaufs wird auf dem Bild wieder mit Pfeilen entlang den Rohrleitungen markiert. Das (19) elektrische Öffnungsventil ist geschlossen, da strömt also keine Flüssigkeit durch. Auf dem Bild ist der (13) innenräumliche Ventilator außer Betrieb. In diesem Zustand kann durch die Bedienungselemente im Fahrgastraum nur die Betriebsheizung betrieben werden. Ihre Temperatur kann nur in dem Maße reguliert werden, wie viel Luft durch den (13) innenräumlichen sekundären Wärmetauscher eingeströmt wird. Wenn der gesamte Luftstrom durch den (13) innenräumlichen sekundären Wärmetauscher einströmt, so wird die Wärmeabgabe der Heizanlage am höchsten. Wenn der gesamte Luftstrom in den Innenraum des Fahrzeugs einströmt, ohne den (13) innenräumlichen sekundären Wärmetauscher durchzuströmen, so bleibt die Lufttemperatur unverändert. Es wird also keine Heizung in Anspruch genommen. Die Temperatur der einströmenden Luft kann zwischen den beiden Extremwerten reguliert werden. Die eingestellte Temperatur wird aber nicht reguliert. Wenn sich die Lufttemperatur im Außenraum erhöht, bzw. abnimmt, so ändert sich auch die Temperatur der nach innen einströmenden Luft, unabhängig von dem eingestellten Wert der Heizungsbedienung. Die Menge der einströmenden Luft kann durch die Umschaltung des (13) innenräumlichen Ventilators auf verschiedene Betriebsdrehzahlen erhöht werden. Bei den meisten Fahrzeugen kann die Einströmung der Außenluft durch die Einschaltung der inneren Luftumlauf-Funktion vermieden werden. In diesem Fall funktioniert auch alles auf der gleichen Weise. Den Kühlbetrieb der Anlage sieht man auf dem Bild Nr. 3. In Kühlbetrieb werden das (1) Peltier-Element, die (8), (9) Umlaufpumpen, die (18) elektrischen Wechselventile, das (19) elektrische Öffnungsventil und der (12) außenräumliche Ventilator von der (15) elektronischen Steuerungseinheit elektrisch gespeist und die genannten Teile werden dadurch in Betrieb gesetzt. Es erwärmt sich die Fläche des mit dem (10) sekundären außenräumlichen Wärmetauscher verbundenen (1) Peltier-Elementes von der Seite des (2) außenräumlichen primären Wärmetauschers her. Die volle Fläche der warmen Seite des (1) Peltier-Elementes berührt den (2) außenräumlichen primären Wärmetauscher, und hier erfolgt die Wärmeübertragung, und dadurch erwärmt sich auch die durch die (8) Umlaufpumpe zirkulierte Flüssigkeit im Wärmetauscher. Die erwärmte Flüssigkeit strömt auch durch den (10) außenräumlichen sekundären Wärmetauscher, der auch erwärmt wird. Der (10) außenräumliche sekundäre Wärmetauscher ist ein dicht lamellierter, durchlüftbarer Radiator. Der rotierende (12) außenräumliche Ventilator sorgt für den Luftstrom, der den (10) außenräumlichen sekundären Wärmetauscher kühlt, dessen Temperatur viel höher als die Umgebungstemperatur wird. Der Luftstrom wird auf dem Bild mit Pfeilen von der Richtung des (12) außenräumlichen Ventilators nach dem (10) außenräumlichen sekundären Wärmetauscher markiert. Die Kühlung der warmen Seite ist unerlässlich, weil die Überheizung des (1) Peltier-Elementes zu Schaden im Element führen kann, außerdem wird die Kühlleistung gleich Null, weil die Wärme von der kalten Seite auf die warme Seite gepumpt wird. Nach der Wärmeabnahme der kalten Seite erfolgt Mehrwärme auf der warmen Seite, deren Abfuhr gelöst werden soll. Der (12) außenräumliche Ventilator mit Kühlfunktion ist an die Lüfterfläche des (10) außenräumlichen sekundären Wärmetauschers befestigt, sie bilden je eine Einheit, die hinter den Lufteinlasshutzen bei der Maske des Fahrzeugs eingesetzt sind, neben eventuell vor dem Lamellen-Kühlradiator, der für die Kühlung des (17) Verbrennungsmotors sorgt. Darüber wird bei der Konstruktion der einzelnen Fahrzeuge entschieden. Am wichtigsten ist die optimale Lüftung durch die einströmende Außenluft, wobei sowohl der Fahrtwind als auch der (12) außenräumliche Ventilator ausgenutzt werden sollen. Die Leistung des (10) außenräumlichen sekundären Wärmetauschers soll so kalibriert werden, dass er sogar bei der maximal möglichen Umgebungstemperatur (z.B.: Sommerhitze, heiße Klimazonen) die Mehrwärme abgeben kann. Für den Schutz des Umlaufs der warmen Seite und des (1) Peltier-Elementes wird an den (2) außenräumlichen primären Wärmetauscher ein seine Fläche berührendes elektronisches Präzisionssensor-Element montiert, das ein mit seiner Temperatur verhältnisgleiches elektrisches Signal an den (4) elektronischen Thermostat liefert. Wenn die Temperatur der warmen Seite das zulässige Limit übersteigt, so gibt der (4) elektronische Thermostat ein Sperrsignal der (15) elektrischen Steuerungseinheit, die dadurch die Stromspeisung des (1) Peltier-Elementes abstellt. Wenn die Temperatur nach der Hysterese des (4) elektronischen Thermostates niedriger als das Limit wird, so wird die (15) elektrische Steuerungseinheit das (1) Peltier-Element wieder anstellen. Dieser Fall kann nur beim Fehler des (12) außenräumlichen Ventilators, der (8) Umlaufpumpe oder der Rohrleitungen vorkommen. Beim Betrieb kühlt sich die andere Seite des (1) Peltier-Elementes ab, beziehungsweise sie wird Wärme entziehen. Dann kühlt sich die an den (11) sekundären innenräumlichen Wärmetauscher indirekt angeschlossene Fläche des (1) Peltier-Elementes von der Seite des (2) außenräumlichen primären Wärmetauschers her ab. Die volle Fläche der kalten Seite des (1) Peltier-Elementes berührt den (2) außenräumlichen primären Wärmetauscher, von dem Wärme entzogen wird, und so kühlt sich auch die dort durch die (9) Umlaufpumpe zirkulierte Flüssigkeit ab. Die abgekühlte Flüssigkeit strömt auch durch den (11) innenräumlichen sekundären Wärmetauscher, der auch abgekühlt wird. Der (11) innenräumliche sekundäre Wärmetauscher ist ein dicht lamellierter, durchlüftbarer Radiator, und der Luftstrom entsteht sowohl durch den Fahrtwind als auch den (13) innenräumlichen Ventilator, dessen Drehzahl und dadurch die gelieferte Luftmenge mit dem entsprechenden Bedienungselement stufenweise geregelt werden kann. Der Luftstrom wird auf dem Bild mit Pfeilen von der Richtung des (13) innenräumlichen Ventilators nach dem (11) innenräumlichen sekundären Wärmetauscher markiert. Es wird auch die von außen einströmende, durch den (11) innenräumlichen sekundären Wärmetauscher übertragene Luft abgekühlt, wobei die Temperatur des Wärmetauschers viel niedriger als die Umgebungstemperatur ist. So erfolgt die Kühlung des Fahrgastraums. Der eingestellte Wert der Innentemperatur des Fahrgastraums wird von der innenräumlichen, elektronischen, als Thermostat fungierenden Steuerungseinheit der Klimaanlage konstant gehalten. Es kann keine Über- und Unterheizung vorkommen. Die Temperaturregelung kann durch die Veränderung des Mischungsverhältnisses der durch den (11) innenräumlichen sekundären Wärmetauscher strömenden Luft und der von außen einströmenden und dem Wärmetauscher ausweichenden Luft sowie durch die temporäre Abstellung der Kühlfunktion durchgeführt werden. Die als Thermostat fungierende elektronische Steuerungseinheit der Klimaanlage im Fahrgastraum stellt das Verhältnis der kalten und warmen Luft entsprechend der erwünschten eingestellten Temperatur ein. Die Innentemperatur des Fahrgastraums wird nach dem Befehl für die (15) elektrische Steuerungseinheit, durch die Ein-/Ausschaltung des (1) Peltier-Elementes gesichert. Wenn die Innentemperatur nach der Hysterese niedriger als der eingestellte Wert wird, schaltet das (1) Peltier-Element aus. Die (8), (9) Umlaufpumpen sind jedoch auch weiterhin im Betrieb. Dann wird die Temperatur des (11) innenräumlichen sekundären Wärmetauschers samt der kalten Flüssigkeit in seinen Flüssigkeitsrillen höher. Wenn die Innentemperatur nach der Hysterese den eingestellten Wert übersteigt, schaltet sich das (1) Peltier-Element wieder ein. Die Leistung des (11) innenräumlichen sekundären Wärmetauschers soll dem Raumgehalt des klimatisierten Innenraums vom Fahrzeug angepasst werden. Auch nach der Einschaltung der inneren Luftumlauf-Funktion geht alles genauso weiter. Die den Luftstrom leitenden Abfuhreinheiten als Bestandteile der Klimaanlage im Innenraum des Fahrzeugs sorgen für die eventuelle Kondensableitung von den Lamellenflächen des (11) innenräumlichen sekundären Wärmetauschers. In dem Umlauf der kalten Seite wird der (2) außenräumliche primäre Wärmetauscher mit der hydraulisch in Reihenschaltung verbundenen (9) Umlaufpumpe nicht direkt, sondern über (18) elektrische Wechselventile an den (11) innenräumlichen sekundären Wärmetauscher angeschlossen. Besser gesagt, die Rohrleitungen des Umlaufs der kalten Seite werden an die Schaltpunkte der (18) elektrischen Wechselventile angeschlossen. In Kühlbetrieb sind die beiden Einheiten unter Spannung, wodurch der Weg der ein- und ausströmenden Flüssigkeit des an ihre Eintrittspunkte angeschlossenen Heizumlaufs abgesperrt wird, und sie lassen die aus- und einströmende Kühlflüssigkeit frei strömen. In diesem Fall würde die Zirkulation der Flüssigkeit des Heizumlaufs verhindert, was eventuell zur Minderleistung der Kühlung des (17) Verbrennungsmotors vom Fahrzeug und zu Schaden führen könnte. Um dies zu vermeiden, ist zwischen den Eintrittspunkten der beiden (18) elektrischen Wechselventile ein (19) elektrisches Öffnungsventil in Parallelschaltung eingesetzt, das in Kühlfunktion unter Spannung, also offen steht. So wird die Zirkulation im Heizungskreis bei Kühlung gelöst. Für den Schutz des Umlaufs der kalten Seite und des (1) Peltier-Elementes wird an den (2) außenräumlichen primären Wärmetauscher ein seine Fläche berührendes elektronisches Präzisionssensor-Element montiert, das ein mit seiner Temperatur verhältnisgleiches elektrisches Signal an den (4) elektronischen Thermostat liefert. Wenn die Temperatur der kalten Seite niedriger das zulässige Limit wird, so gibt der (4) elektronische Thermostat ein Sperrsignal der (15) elektrischen Steuerungseinheit, die dadurch die Stromspeisung des (1) Peltier-Elementes abstellt. Wenn die Temperatur nach der Hysterese des (4) elektronischen Thermostates das Limit übersteigt, so wird die (15) elektrische Steuerungseinheit das (1) Peltier-Element wieder anstellen. Dieser Fall kann nur beim Fehler des (13) innenräumlichen Ventilators, der (9) Umlaufpumpe oder der Rohrleitungen vorkommen. Wenn es zur Überkühlung kommt, dann kann das frostbeständige flüssige Mittel eventuell viskoser werden oder sogar einfrieren, was die Bestandteile des Kühlumlaufs beschädigen kann. Die Strömungsrichtungen des Flüssigkeitsmittels sind auf dem Bild mit Pfeilen entlang den Rohrleitungen markiert. Der Heizbetrieb wird auf dem Bild Nr. 2 dargestellt. Der Heizbetrieb ist eigentlich gleich mit dem auf dem Bild Nr. 2 dargestellten statischen Zustand, es gibt nur den Unterschied, dass der (13) innenräumliche Ventilator immer in irgendeiner Stufe betrieben wird, sowie der eingestellte Wert der Innentemperatur des Fahrgastraums von der innenräumlichen, elektronischen, als Thermostat fungierenden Steuerungseinheit der Klimaanlage konstant gehalten wird. Es kann keine Über- und Unterheizung vorkommen. Diese Temperaturregelung wird durch die Veränderung des Mischungsverhältnisses der durch den (11) innenräumlichen sekundären Wärmetauscher strömenden Luft und der von außen einströmenden und dem Wärmetauscher ausweichenden Luft sowie durch die Absperrung der Flüssigkeitsströmung im Heizumlauf durch den (11) innenräumlichen sekundären Wärmetauscher durchgeführt. Die als Thermostat fungierende elektronische Steuerungseinheit der Klimaanlage im Fahrgastraum stellt das Verhältnis der kalten und warmen Luft entsprechend der erwünschten eingestellten Temperatur ein. Die Innentemperatur des Fahrgastraums wird nach dem Befehl für die (15) elektrische Steuerungseinheit, durch die (18) elektrischen Wechselventile und die gleichzeitige Ein-/Ausschaltung des (19) elektrischen Öffnungsventils konstant gehalten. Wenn die Innentemperatur nach der Hysterese den eingestellten Wert übersteigt, dann werden die (18) elektrischen Wechselventile den (11) innenräumlichen sekundären Wärmetauscher von dem Heizungskreis auf den Kühlungskreis umschalten, und das (19) elektrische Öffnungsventil sorgt für die ungestörte Zirkulation im Heizungskreis. Aber der Kühlbetrieb läuft nicht an. Der (11) innenräumliche sekundäre Wärmetauscher kühlt sich mit der warmen Kühlflüssigkeit in den Flüssigkeitsrillen langsam ab. Wenn die Temperatur der gemischten kalten-warmen, einströmenden Luft niedriger als das untere Niveau der Hysterese wird, so schalten die (18) elektrischen Wechselventile und das (19) elektrische Öffnungsventil aus, wodurch der (11) innenräumliche sekundäre Wärmetauscher wieder in den Heizungsumlauf eingeschaltet wird und sich wieder erwärmt. Auf dem Bild Nr. 5 wird der Entlüftungsbetrieb der Klimaanlage dargestellt. Der Entlüftungsbetrieb kann durch das Bedienungselement auf der (15) elektronischen Steuerungseinheit aktivisiert werden, und zwar ohne Gangschaltung des (17) Verbrennungsmotors vom Fahrzeug. In dem Entlüftungsbetrieb werden nur die (8), (9) Umlaufpumpen, die (18) elektrischen Wechselventile und das (19) elektrische Öffnungsventil von der (15) elektronischen Steuerungseinheit eingeschaltet. So wird der (11) innenräumliche sekundäre Wärmetauscher auf den Kühlungskreis der Klimaanlage umgeschaltet, so kommt es zur Zirkulation sowohl auf der kalten als auch der warmen Seite. Die Flüssigkeitsumläufe können individuell, durch die manuell zu betätigenden (6) Entlüftungsventile entlüftet werden. Vorher soll man aber die Einlassöffnung des (14) Expansionsbehälters befreien. Man soll das (6) Entlüftungsventil manuell öffnen, das zum jeweilig zu entlüftenden Flüssigkeitsumlaufs gehört. Durch seine Auslassöffnung wird Flüssigkeit durchgehend aus dem System austreten. Man soll ständig überprüfen, wie die Flüssigkeit ausströmt. Solange der austretende Flüssigkeitsstrom nicht kontinuierlich ist, sondern er spritzt nur, bedarf der jeweilige Umlauf Entlüftung. Die ausgetretene Flüssigkeit soll man in einem Gefäß auffangen. Wenn das Flüssigkeitsniveau im (14) Expansionsbehälter die Minimumskala erreicht, soll man das (6) Entlüftungsventil manuell schließen, und die im Gefäß aufgefangene Flüssigkeit an der Einlassöffnung in den (14) Expansionsbehälter wieder eintrichtern. Dieses Verfahren soll nach und nach wieder durchgeführt werden, bis die Flüssigkeitsströmungen aus den beiden (6) Entlüftungsventilen kontinuierlich werden. Nachdem die gesamte Luftmenge aus dem System ausgetreten ist, soll man die Verschlusskappe der Einlassöffnung des (14) Expansionsbehälters zurückversetzen und den (17) Verbrennungsmotor des Fahrzeugs abstellen. So schaltet auch der Entlüftungsbetrieb aus. Es gibt eine gegenseitige elektronische Blockierung zwischen dem Heiz- und Kühlbetrieb sowie dem Entlüftungsbetrieb der Klimaanlage. Die Strömungsrichtungen der Flüssigkeit während dieses Betriebs werden auf dem Bild Nr. 5 mit Pfeilen entlang den Rohrleitungen markiert. Auf dem Bild Nr. 6 wird die Anwendung der thermoelektrischen Klimaanlage in Fahrzeugen mit elektrischem Antrieb, in statischem Zustand dargestellt. Weil die Motoren der Fahrzeuge mit elektrischem Antrieb über keine Flüssigkeitskühlung verfügen, so kann keine daraus resultierende Wärme für Heizung verwendet werden, deshalb ist die Umschaltbarkeit des (11) innenräumlichen Wärmetauschers von einem Flüssigkeitsumlauf auf den anderen nicht nötig, und so werden die (18) elektrischen Wechselventile und das (19) elektrische Öffnungsventil überflüssig. Deswegen wird der (11) innenräumliche sekundäre Wärmetauscher mit seinem Eingangszweig über die (9) Umlaufpumpe, damit in Reihenschaltung verbunden, direkt an den (2) außenräumlichen primären Wärmetauscher angeschlossen. Die beiden Flüssigkeitsumläufe werden auch in diesem Fall an den gemeinsamen (14) Expansionsbehälter angeschlossen. Auf dem Bild Nr. 7 wird der Kühl-Heizbetrieb der thermoelektrischen Klimaanlage bei der Anwendung in Fahrzeugen mit elektrischem Antrieb dargestellt. Der Kühlbetrieb funktioniert auf der gleichen Weise wie auf dem Bild Nr. 3 (mit Ausnahme der Ventile). Die Heizfunktion wird aber wieder von einem (1) Peltier-Element durchgeführt, wobei eine Umpolung durch die (15) elektronische Steuerungseinheit erfolgt. Nach diesem Vorgang werden die kalten und warmen Seiten verwechselt. Der (10) außenräumliche sekundäre Wärmetauscher und der angekoppelte (2) außenräumliche primäre Wärmetauscher kühlen sich ab, und der (11) innenräumliche sekundäre Wärmetauscher und der angekoppelte (2) außenräumliche primäre Wärmetauscher erwärmen sich. Dann wird auch der (4) elektronische Thermostat das elektrische Signal der (3) elektronischen Wärmesensoren sinngemäß umgekehrt verstehen. Die Aus-/Einschaltung der Kühl-/Heizfunktionen, wodurch die Innentemperatur konstant gehalten werden kann, erfolgt durch die Aus-/Einschaltung des (1) Peltier-Elementes. Wenn der Kühl-/Heizbetrieb wegen der Temperaturregelung vorläufig abgestellt wird, und das (1) Peltier-Element ausgeschaltet ist, sind die (8), (9) Umlaufpumpen fortwährend im Betrieb. Die Konstanthaltung und Temperaturregelung des Fahrgastraums erfolgt gleich wie in den Fahrzeugen mit Verbrennungsmotor. Die als Thermostat fungierende elektronische Steuerungseinheit der Klimaanlage im Fahrgastraum hat die Aufgabe, die Temperatur der Außenluft, der von außen durch einen Luftkanal einströmenden Luft und die Innentemperatur im Fahrgastraum zu messen. Die Außentemperatur wird mit der eingestellten, erwünschten Temperatur verglichen. Wenn die eingestellte Temperatur niedriger als die Außentemperatur ist, so wird die innenräumliche elektronische Steuerungseinheit der Klimaanlage der (15) elektronischen Steuerungseinheit die Anweisung geben, den Kühlbetrieb einzuschalten. Wenn die eingestellte Temperatur höher als die Außentemperatur ist, so wird die innenräumliche elektronische Steuerungseinheit der Klimaanlage der (15) elektronischen Steuerungseinheit die Anweisung geben, den Heizbetrieb einzuschalten. Die Messung der Temperatur der ausströmenden Luft ist zur Einstellung des optimalen Mischungsverhältnisses der kalten und warmen Luft nötig. Die ständige Beobachtung der Innentemperatur des Fahrgastraums ist unerlässlich für die Temperaturregelung. Auf dem Bild Nr. 8 wird der Entlüftungsbetrieb in Fahrzeugen mit elektrischem Antrieb dargestellt. Das Verfahren der Entlüftung ist gleich wie das auf dem Bild Nr. 5 dargestellte Entlüftungsverfahren in Fahrzeugen mit Verbrennungsmotor, es gibt nur den Unterschied, dass der Elektromotor des Fahrzeugs nicht in Betrieb gesetzt werden soll. Der Entlüftungsbetrieb wird mit der Unterbrechung der Speisespannung für die (15) elektronische Steuerungseinheit der Klimaanlage getilgt. Es ist sowohl bei den Fahrzeugen mit Verbrennungsmotor als auch mit elektrischem Antrieb wichtig, dass der Gefrierpunkt des flüssigen Mittels niedriger ist als die von dem (4) elektronischen Thermostat zugelassene Minimaltemperatur der kalten Seite. Wenn man die sich aneinander knüpfenden Elemente nach den Schnittpunkten (Vx) der Bilder Nr. 1-8 aus ihrer Umgebung aussticht, und an ihre Stelle die aneinander geknüpften Elemente der Bilder Nr. 9-11 einsetzt, es entstehen drei mögliche, in der Praxis funktionierende Varianten der Aufbau-Blockanrisse der Anlage der Erfindung, und zwar bei der Anwendung in Fahrzeugen mit Verbrennungsmotor und mit elektrischem Antrieb, in jeder Betriebsweise. Durch die Einfügung der Blockzeichnungen der Bilder Nr. 9-11 entsteht ein Blockschema mit zwei oder mehr Kühleinheiten der Anlage der Erfindung. Es entsteht durch drei verschiedene Schaltungsarten der (2) außenräumlichen primären Wärmetauscher auf der warmen Seite der Kühleinheiten. Auf den Bildern Nr. 9-11 sind die (1) Peltier-Elemente zwischen den beiden mit (3) elektronischem Wärmesensor versehenen (2) außenräumlichen primären Wärmetauschern (als Kühleinheiten von der ersten bis zum "n.") nur als je ein Block, mit Vierecken markiert. Die Grenze der kalten und warmen Seiten wird mit Strichlinien markiert. Auf den Blöcken sind die Ein- und Ausgangspunkte der Flüssigkeitsrillen der Wärmetauscher sowohl der kalten als auch der warmen Seite, mit Pfeilen der Strömungsrichtung markiert. Die (2) außenräumlichen primären Wärmetauscher der kalten Seite auf den Bildern Nr. 9-11 sind hydraulisch miteinander in Reihenschaltung verbunden, und der Flüssigkeitsumlauf wird durch die (9) Umlaufpumpe zirkuliert, die mit dem Ausgangszweig des (2) außenräumlichen primären Wärmetauschers der "n." kalten Seite in Reihenschaltung verbunden ist. Auf dem Bild Nr. 9 wird eine unabhängige Schaltung der (2) außenräumlichen primären Wärmetauscher der warmen Seite der Kühleinheiten dargestellt, in einer angemessenen Schaltung mit den dazu gehörenden (10) außenräumlichen sekundären Wärmetauschern und mit den (8) Umlaufpumpen. Auf dem Bild Nr. 10 sieht man hinsichtlich der kalten Seite wieder die oben genannte Situation, es gibt nur den Unterschied, dass hier eine Reihenschaltung der (2) außenräumlichen primären Wärmetauscher der warmen Seite der Kühleinheiten dargestellt wird, in einer angemessenen Schaltung mit den dazu gehörenden (10) außenräumlichen sekundären Wärmetauschern und mit der (8) Umlaufpumpe. Auf dem Bild Nr. 11 wird die letzte mögliche Variante als eine Parallelschaltung der (2) außenräumlichen primären Wärmetauscher der warmen Seite der Kühleinheiten dargestellt, in einer angemessenen Schaltung mit den dazu gehörenden (10) außenräumlichen sekundären Wärmetauschern und mit der (8) Umlaufpumpe. Die Vorteile der Erfindung einer thermoelektrischen Klimaanlage liegen in dem einfacheren strukturellen Aufbau, in dem kleineren Gewicht, in den seltener vorkommenden Fehlern und in der rentablen Produktion sowie in einem völlig umweltschonenden Betrieb mit gutem Wirkungsgrad. In Fahrzeugen mit Verbrennungsmotor ist der Leistungsausfall in Kühlbetrieb wesentlich geringer als bei den aktuell verwendeten Klimaanlagen, und so wird auch die Erhöhung des Kraftstoffverbrauchs geringer.

## Patentansprüche

1. Eine thermoelektrische Klimaanlage für Fahrzeuge mit flüssigkeitsgekühltem Verbrennungsmotor, mit dem Einsatz von einem oder mehr Peltier-Elementen (1) zwischen zwei außenräumlichen, an einen elektronischen Thermostat (4) gekoppelten, primären Wärmetauschern (2) mit elektronischem Wärmesensor (3), wobei die Wärmetauscher die volle ebene Fläche des Peltier-Elementes berührten. In den Wärmetauschern wurden schlangenförmige strömungsleitende Flüssigkeitsrillen ausgestaltet, und der eine Wärmetauscher wird an einen mit einem außenräumlichen Ventilator (12) gelüfteten außenräumlichen sekundären Wärmetauscher (10) durch eine wärmeisolierte Rohrleitung (5) über eine Umlaufpumpe (8) angeschlossen, die mit dem Ausgangszweig in Reihenschaltung verbunden ist. Der andere Wärmetauscher wird an einen mit innenräumlichem Ventilator (13) gelüfteten innenräumlichen sekundären Wärmetauscher (11) angeschlossen, dessen Ausgangs- und Eingangszweige in Reihenschaltung verbunden sind und der über elektrische Wechselventile (18) verfügt, dessen Eintrittspunkte mit einem elektrischen Öffnungsventil (19) verbunden sind. Dieser Wärmetauscher ist gleich mit dem Wärmetauscher der Heizanlage der Pkws, der wieder durch eine wärmeisolierte Rohrleitung (5) durch Schaltpunkte der elektrischen Wechselventile (18) über eine Umlaufpumpe (9) angeschlossen wird, die mit dem Ausgangszweig in Reihenschaltung verbunden ist. Das Kühl-/Heizmittel des Systems ist gleich wie das Kühlmittel des Pkw-Motors, und steht damit in hydraulischer Verbindung, weil es auch an den Expansionsbehälter (14) der Kühlflüssigkeit des Fahrzeugs durch Zufuhrleitungen (7) angeschlossen wird, und die zwei Flüssigkeitsumläufe über je ein Entlüftungsventil (6) verfügen. Die Aus- und Eintrittspunkte der für die Heizung des Verbrennungsmotors (17) verwendeten Kühlflüssigkeit sind an die Eintrittspunkte der elektrischen Wechselventile (18) angeschlossen. Sowie die Elektroeinheiten sind elektrisch indirekt an den zusätzlichen von dem Verbrennungsmotor (17) des Fahrzeugs angetriebenen Stromgenerator (16) durch eine elektronische Steuerungseinheit (15) angeschlossen, **gekennzeichnet dadurch, dass** dem Kühlleistungsbedarf entsprechend zwei oder mehr Kühleinheiten (20) eingesetzt werden, die aus einem/mehreren Peltier-Element(en) (1) und aus - dem elektronischen Thermostat (4) angeschlossenen - elektronischen Wärmesensoren (3), und aus zwei außenräumlichen primären Wärmetauschern bestehen. Die außenräumlichen primären Wärmetauscher (2) der kalten Seite stehen miteinander hydraulisch in Reihenschaltung, die außenräumlichen primären Wärmetauscher (2) der warmen Seite können in Hinsicht der Wärmeabgabe hydraulisch nach drei verschiedenen Schaltungsweisen (in Reihenschaltung, Parallelschaltung oder voneinander unabhängig) miteinander bzw. mit einem oder mehr mit einem außenräumlichen Ventilator (12) gelüfteten, außenräumlichen sekundären Wärmetauschern (10) und mit einer oder mehr dazugehörigen Umlaufpumpen verbunden werden. Ihre Fläche, die ein oder mehr Peltier-Element (1) berührt, soll mindestens so groß oder beinahe so groß sein wie das Peltier-Element bzw. bei mehreren Elementen die wärmeübertragende Gesamtfläche jeder Seite. Die Betriebstemperatur der außenräumlichen primären Wärmeaustauscher (2) der warmen Seite darf die Außentemperatur der ungekühlten Umgebung höchstens um 15 C° übersteigen, und die Stromstärke beim Betrieb von je einem Peltier-Element (1) soll niedriger als die Hälfte der maximalen Stromstärke dieses Typs sein.

2. Eine thermoelektrische Klimaanlage für Fahrzeuge mit flüssigkeitsgekühltem Verbrennungsmotor nach dem Patentanspruch Nr. 1, **gekennzeichnet dadurch, dass** die außenräumlichen sekundären Wärmetauscher (10) durch einen mit einem oder mehr außenräumlichen Ventilatoren gelüfteten (12) außenräumlichen sekundären Wärmetauscher ersetzt werden können, der über genügende Flüssigkeitsrillen und über angemessene Leistung verfügt.

3. Eine thermoelektrische Klimaanlage für Fahrzeuge mit flüssigkeitsgekühltem Verbrennungsmotor nach dem Patentanspruch Nr. 1, **gekennzeichnet dadurch, dass** die außenräumlichen sekundären Wärmetauscher (10) nicht nur voneinander unabhängig, sondern auch gemeinsam mit einem oder mehr außenräumlichen Ventilatoren (12) gelüftet werden können, wobei die Wärmetauscher ihrer wärmeübertragender Fläche gegenüberstehend aufeinander gelegt sind.

4. Eine thermoelektrische Klimaanlage für Fahrzeuge mit elektrischem Antrieb, mit dem Einsatz von einem oder mehr Peltier-Elementen (1) zwischen zwei außenräumlichen, an einen elektronischen Thermostat (4) gekoppelten, primären Wärmetauschern (2) mit elektronischem Wärmesensor (3), wobei die Wärmetauscher die volle ebene Fläche des Peltier-Elementes berühren. In den Wärmetauschern wurden schlangenförmige strömungsleitende Flüssigkeitsrillen ausgestaltet. Der eine Wärmetauscher wird an einen mit einem außenräumlichen Ventilator (12) gelüfteten außenräumlichen sekundären Wärmetauscher (10) durch eine wärmeisolierte Rohrleitung (5) über eine Umlaufpumpe (8) angeschlossen, die mit dem Ausgangszweig in Reihenschaltung verbunden ist. Der andere Wärmetauscher wird an einen mit innenräumlichem Ventilator (13) gelüfteten innenräumlichen sekundären, in der Heizanlage im Innenraum des Fahrzeugs eingesetzten Wärmetauscher (11) wieder durch eine wärmeisolierte Rohrleitung (5) über eine Umlaufpumpe (9) angeschlossen, die mit dem Ausgangszweig in Reihenschaltung verbunden ist. Die zwei Flüssigkeitsumläufe, die über je ein Entlüftungsventil (6) verfügen, stehen miteinander in hydraulischer Verbindung, weil sie an einen Ausgleichsbehälter (14) durch Zufuhrleitungen (7) angeschlossen werden. Die Elektroeinheiten sind elektrisch indirekt an die Speisequelle des Elektromotors vom Fahrzeug durch eine elektronische Steuerungseinheit (15) angeschlossen, **gekennzeichnet dadurch, dass** dem Kühlleistungsbedarf entsprechend zwei oder mehr Kühleinheiten (20) eingesetzt werden, die aus einem/mehreren Peltier-Element(en) (1) und aus - dem elektronischen Thermostat (4) angeschlossenen - elektronischen Wärmesensoren (3), und aus zwei außenräumlichen primären Wärmetauschern bestehen. Die außenräumlichen primären Wärmetauscher (2) der kalten Seite stehen miteinander hydraulisch in Reihenschaltung, die außenräumlichen primären Wärmetauscher (2) der warmen Seite können in Hinsicht der Wärmeabgabe hydraulisch nach drei verschiedenen Schaltungsweisen (in Reihenschaltung, Parallelschaltung oder voneinander unabhängig) miteinander bzw. mit einem oder mehr mit einem außenräumlichen Ventilator (12) gelüfteten, außenräumlichen sekundären Wärmetauschern (10) und mit einer oder mehr dazugehörigen Umlaufpumpen verbunden werden. Ihre Fläche, die ein oder mehr Peltier-Element (1) berührt, soll mindestens so groß oder beinahe so groß sein wie das Peltier-Element bzw. bei mehreren Elementen die wärmeübertragende Gesamtfläche jeder Seite. Die Betriebstemperatur der außenräumlichen primären Wärmeaustauscher (2) der warmen Seite darf die Außentemperatur der ungekühlten Umgebung höchstens um 15 C° übersteigen. Die Stromstärke beim Betrieb von je einem Peltier-Element (1) soll niedriger als die Hälfte der maximalen Stromstärke dieses Typs sein.

5. Eine thermoelektrische Klimaanlage für Fahrzeuge mit elektrischem Antrieb nach dem Patentanspruch Nr. 4, **gekennzeichnet dadurch, dass** die außenräumlichen sekundären Wärmetauscher (10) durch einen mit einem oder mehr außenräumlichen Ventilatoren gelüfteten (12) außenräumlichen sekundären Wärmetauscher ersetzt werden können, der über genügende Flüssigkeitsrillen und über angemessene Leistung verfügt.

6. Eine thermoelektrische Klimaanlage für Fahrzeuge mit elektrischem Antrieb nach dem Patentanspruch Nr. 4, **gekennzeichnet dadurch, dass** die außenräumlichen sekundären Wärmetauscher (10) nicht nur voneinander unabhängig, sondern auch gemeinsam mit einem oder mehr außenräumlichen Ventilatoren (12) gelüftet werden können, wobei die Wärmetauscher ihrer wärmeübertragender Fläche gegenüberstehend aufeinander gelegt sind.

## Claims

1. Thermoelectric air conditioning equipment for vehicles driven by explosion engine with liquid cooling, in which one or more Peltier-battery(ies) (1) are located between two external primary heat exchangers (2), connected to two electronic thermostats (4), and provided with electronic thermal sensor (3); contacting the heat exchangers over their whole flat surfaces; in which sinuous, flow conducting liquid ducts are formed, one of which is connected to an external secondary heat exchanger (10) which is ventilated by external fan (12), by means of heat insulated pipeline (5), through a circulation pump with its outgoing branch in cascade connection (8); the other is connected to an internal secondary heat exchanger (11), with its outgoing and input branches in cascade connection, provided with electrically operated turnover valves (18) whose input points are connected to electrically operated by-pass valve (19), ventilated by an internal fan (13); which is identical with the heat exchanger used in the heating equipment of passenger vehicles, and also connected by means of heat insulated pipeline (5), through the turning points of the electrically operated turnover valves (18), and the circulation pump with its outgoing branch in cascade connection (9); the heating-cooling medium of the system is identical with the cooling medium of the vehicle's engine, and is in a hydraulic connection with it as it is also connected to the expansion tank (14) of the vehicle's cooling liquid, by means of charging hoses (7), and each of its two circuits is separately connected to air-escape valves (6), whereas the output-input points of the cooling liquid of the vehicle's explosion engine (17) used for heating are connected to the input points of the electrically operated turnover valves (18); furthermore, the electric units are connected to the electric supplementary generator (16) driven by the vehicle's explosion engine (17) in an electrically indirect way, through an electronic control unit (15), which can be **characterized** as follows: according to the demand for cooling capacity, two or more of the Peltier-batteries (1), the electronic thermal sensors (3) connected to the electronic thermostat (4), and the cooling unit constituted by the two external primary heat exchangers (20) will be used; whose external primary heat exchangers on the cold side (2) are connected to one another in hydraulic cascade connection, whereas its external primary heat exchangers on the hot side (2), from the aspect of calorific output, shall be connected in one of the three different hydraulic connections, i.e. cascade, parallel, or independent to one another, or to the one or more external secondary heat exchangers (10) which are ventilated by means of external fan (12), and to the related one or more circulation pumps; furthermore, their surfaces contacting the one or more Peltier-battery(ies) (1) shall be of the minimum size of the Peltier-battery, or nearly the same size as the Peltier-battery, whereas the total heat transfer surface of the batteries by sides, and the working temperature of the external primary heat exchangers on the hot side (2) can be maximum 15 C° above the temperature of the external area outside the cooled area, and the value of the operating current separately used for each of the one or more Peltier-battery(ies) (1) shall be below the half of the maximum current value typical of the type.

2. Thermoelectric air conditioning equipment according to claim 1 for vehicles driven by explosion engine with liquid cooling, which can be **characterized** as follows: the external secondary heat exchangers (10) can be replaced by one liquid duct/ by liquid ducts of the required number; external secondary heat exchanger (10), ventilated by one or more external fans (12), having the required capacity.

3. Thermoelectric air conditioning equipment according to claim 1 for vehicles driven by explosion engine with liquid cooling, which can be **characterized** as follows: the external secondary heat exchangers (10) can be ventilated not only independently, but also with their heat transfer surfaces located on one another, together with one or more external fans (12).

4. Thermoelectric air conditioning equipment for vehicles driven by electric motor, in which one or more Peltier-battery(ies) (1) are located between two external primary heat exchangers (2), connected to two electronic thermostats (4), and provided with electronic thermal sensor (3), contacting the heat exchangers over their whole flat surfaces; in which sinuous, flow conducting liquid ducts are formed; one of which is connected to an external secondary heat exchanger (10) which is ventilated by external fan (12), by means of heat insulated pipeline (5), through a circulation pump with its outgoing branch in cascade connection (8); the other is connected to an internal secondary heat exchanger (11) ventilated by an internal fan (13), located in the heating equipment inside the vehicle, also connected by means of heat insulated pipeline (5), through a circulation pump with its outgoing branch in cascade connection (9); furthermore, the two circuits separately provided with air-escape valves (6) are in hydraulic connection with each other as they are connected to an expansion tank (14) by means of charging hoses (7); furthermore, the electric units are connected to the power supply of the vehicle's electric engine (17) in an electrically indirect way, through an electronic control unit (15), which can be **characterized** as follows: according to the demand for cooling capacity, two or more of the Peltier-batteries (1), the electronic thermal sensors (3) connected to the electronic thermostat (4), and the cooling unit constituted by the two external primary heat exchangers (20) will be used, whose external primary heat exchangers on the cold side (2) are connected to one another in hydraulic cascade connection, whereas its external primary heat exchangers on the hot side (2), from the aspect of calorific output, shall be connected in one of the three different hydraulic connections, i.e. cascade, parallel, or independent to one another, or to the one or more external secondary heat exchangers (10) which are ventilated by means of external fan (12), and to the related one or more circulation pumps; furthermore, their surfaces contacting the one or more Peltier-battery(ies) (1) shall be of the minimum size of the Peltier-battery, or nearly the same size as the Peltier-battery, whereas the total heat transfer surface of the batteries by sides, and the working temperature of the external primary heat exchangers on the hot side (2) can be maximum 15 C° above the temperature of the external area outside the cooled area, and the value of the operating current separately used for each of the one or more Peltier-battery(ies) (1) shall be below the half of the maximum current value typical of the type.

5. Thermoelectric air conditioning equipment according to claim 4 for vehicles driven by electric motor, which can be **characterized** as follows: the external secondary heat exchangers (10) can be replaced by one liquid duct/ liquid ducts of the required number; external secondary heat exchanger (10), ventilated by one or more external fans (12), having the required capacity.

6. Thermoelectric air conditioning equipment according to claim 4 for vehicles driven by electric engine, which can be **characterized** as follows: the external secondary heat exchangers (10) can be ventilated not only independently, but also with their heat transfer/absorption surfaces located on one another, together with one or more external fans (12).

## Revendications

1. L'équipement thermoélectrique des appareils de climatisation des véhicules à moteur à combustion à refroidissement par liquide, dans lesquels une ou plusieurs batterie(s) Peltier (1) sont installées entre deux échangeurs de chaleur primaires externes (2), reliés à deux thermostats électroniques (4) équipés d'un capteur thermique électronique (3); en contact avec les échangeurs de chaleur sur l'ensemble de leur surfaces planes; dans lesquels il y a formation de liquide conducteur, l'un des échangeurs étant connecté à un échangeur de chaleur secondaire (10), ventilé par un radiateur externe (12), par le biais de conduits thermiquement isolés (5), grâce à une pompe de circulation dont l'embout de connexion est en cascade (8), le deuxième étant relié à un échangeur de chaleur secondaire interne (11), avec ses orifices d'entrée et de sortie branchés en cascade, dotés de soupapes escamotables, commandées électriquement (18) dont les points d'entrée sont connectés à un clapet de dérivation commandé électriquement (19), ventilé par un radiateur interne (13), qui est identique à l'échangeur de chaleur utilisés dans les équipements de chauffage des véhicules de transport et également relié par le biais d'un conduit isolé thermiquement (5) ; par l'intermédiaire des orifices des vannes commandées électriquement (18), et de la pompe de circulation avec son embout de sortie branché en cascade (9); le système de refroidissement du chauffage est identique à celui d'un véhicule à moteur et est relié hydrauliquement à celui-ci, étant aussi branché sur le vase d'expansion (14) du véhicule et le liquide de refroidissement qu'il contient, grâce à des tuyaux d'alimentation (7), chacun de ces deux circuits étant relié séparément aux soupapes d'évacuation d'air (6), alors que les points d'admission et d'évacuation du liquide de refroidissement du moteur à explosion du véhicule (17) utilisés pour le chauffage, sont connectés aux points d'admission des soupapes commandées électriquement (18); en outre, les unités électriques sont reliées au générateur électrique supplémentaire (16) actionnées par l'explosion dans le moteur du véhicule (17) du fait d'une action électrique indirecte qui émane d'une unité de contrôle électronique (15) et dont les caractéristiques sont les suivantes : conformément à la demande de capacité de refroidissement, deux ou plusieurs batteries Peltier (1), les capteurs électroniques thermiques (3) connectés au thermostat électronique (4) et l'unité de refroidissement constituée par les deux échangeurs primaires externes de chaleur (20) seront utilisés; dont les échangeurs de chaleur primaires externes sur le côté froid (2) sont branchés les uns aux autres dans le cadre d'une cascade hydraulique, alors que les échangeurs primaires externes de chaleur sur le côté chaud (2), d'un point de vue de production calorifique, doivent être branchés à l'une trois connexions hydrauliques différentes, c'est-à-dire en cascade, en parallèle, indépendants l'un de l'autre ou de l'un ou de plusieurs échangeurs de chaleur secondaires externes (10), qui sont ventilés par des moyens externes de ventilation (12) et à une ou plusieurs pompes; en outre, leur surface avec l'une des batteries Peltier ou plusieurs d'entre elles (1) est de la taille minimale de la batterie Peltier ou à peu près de la même taille de cette dernière, alors que la surface totale de transfert de la chaleur sur les côtés et la température extérieure des échangeurs de chaleur primaires externes sur le côté chaud (2) peut s'élever au maximum de 15 C au-dessus de la température de la zone située hors de la zone de refroidissement et la valeur de l'alimentation courante utilisée séparément pour chacune du ou de plusieurs des batteries Peltier (s) (1) doit être inférieure à la moitié de la valeur maximale de courant applicable à ce type.

2. L'équipement thermoélectrique de conditionnement d'air, qui est conforme à la réclamation n°1 relative aux véhicules à moteur à combustion et à liquide de refroidissement, a les caractéristiques suivantes : les échangeurs de chaleur (10) secondaires peuvent être remplacés par un / des conduit(s) liquide(s) en nombre correspondant, un échangeur de chaleur secondaire externe (10), ventilé par un ou plusieurs radiateurs externes (12), à la capacité requise.

3. L'équipement thermoélectrique de conditionnement d'air, qui est conforme à la réclamation n°1 relative aux véhicules à moteur à combustion et à liquide de refroidissement, a les caractéristiques suivantes : les échangeurs de chaleur secondaires externes (10) peuvent être ventilés non seulement indépendamment mais aussi avec leurs surfaces de transfert de chaleur située l'une sur l'autre, avec un ou plusieurs radiateurs externes (12).

4. L'équipement thermoélectrique des appareils de climatisation des véhicules à moteur électrique, dans lesquels une ou plusieurs batterie(s) Peltier (1) sont installées entre deux échangeurs de chaleur primaires externes (2), reliés à deux thermostats électroniques (4) équipés d'un capteur thermique électronique (3); en contact avec les échangeurs de chaleur sur l'ensemble de leur surfaces planes; dans lesquels il y a formation de liquide conducteur, l'un des échangeurs étant connecté à un échangeur de chaleur secondaire (10), ventilé par un radiateur externe (12), par le biais de conduits thermiquement isolés (5), grâce à une pompe de circulation dont l'embout de connexion est en cascade (8), le deuxième étant relié à un échangeur de chaleur secondaire interne (11), ventilé par un ventilateur interne (13) situé dans l'appareil de chauffage du véhicule, branché aussi grâce à une tuyauterie (5), grâce à une pompe avec son embout de sortie connecté en cascade (9) ; en outre, les deux circuits dotés chacun de soupapes d'évacuation d'air (6) sont branchées hydrauliquement entre elles alors qu'elles sont reliées à un vase d'expansion (14) au moyen de conduits d'alimentation (7) ; d'autre part, les unités électriques sont reliées à l'alimentation électrique du moteur électrique du véhicule (17) d'une manière électrique indirecte, grâce à une unité de contrôle électrique (15) et dont les caractéristiques sont les suivantes : conformément à la demande de capacité de refroidissement, deux ou plusieurs batteries Peltier (1), les capteurs électroniques thermiques (3) connectés au thermostat électronique (4) et l'unité de refroidissement constituée par les deux échangeurs primaires externes de chaleur (20) seront utilisés; dont les échangeurs de chaleur primaires externes sur le côté froid (2) sont branchés les uns aux autres dans le cadre d'une cascade hydraulique, alors que les échangeurs primaires externes de chaleur sur le côté chaud (2), d'un point de vue de production calorifique, doivent être branchés à l'une trois connexions hydrauliques différentes, c'est-à-dire en cascade, en parallèle, indépendant l'un de l'autre ou de l'un ou de plusieurs échangeurs de chaleur secondaires externes (10), qui sont ventilés par des moyens externes de ventilation (12) et à une ou plusieurs pompes; en outre, leur surface avec l'une des batteries Peltier ou plusieurs d'entre elles (1) est de la taille minimale de la batterie Peltier ou à peu près de la même taille de cette dernière, alors que la surface totale de transfert de la chaleur sur les côtés et la température extérieure des échangeurs de chaleur primaires externes sur le côté chaud (2) peut s'élever au maximum de 15 C au-dessus de la température de la zone située hors de la zone de refroidissement et la valeur de l'alimentation courante utilisée séparément pour chacune du ou de plusieurs des batteries Peltier (s) (1) doit être inférieure à la moitié de la valeur maximale de courant applicable à ce type.

5. L'équipement thermoélectrique de conditionnement d'air selon la réclamation n°4 concernant les véhicules à moteur à combustion et liquide de refroidissement, peut être **caractérisé** comme suit: les échangeurs de chaleur externes secondaires (10) peuvent être remplacés par une gaine liquide / liquide par les conduits du nombre requis; secondaire externe échangeur de chaleur (10), ventilé par un ou plusieurs radiateurs externes (12), avoir la capacité requise.

6. L'équipement thermoélectrique de conditionnement d'air selon la réclamation 4 concernant les véhicules à moteur électrique, peut avoir les caractéristiques suivantes : les échangeurs de chaleur secondaires externes (10) peuvent être ventilés non seulement indépendamment les uns des autres mais aussi avec leurs surfaces de transfert de chaleur situées les unes sur les autres, avec un ou plusieurs radiateurs externes (12).
